# EUROPEAN PATENT SPECIFICATION

(11) **EP 3 897 130 B1**
(45) Date of publication and mention of the grant of the patent: **25.01.2023**
(21) Application number: 19832939.3
(22) Date of filing: 20.12.2019
(51) Int. Cl.: A01N 25/02, A01N 25/30, A01N 25/04, A01N 37/40, A01N 39/02, A01N 57/20, A01P 13/00

(54) **AGROCHEMICAL COMPOSITION**
AGROCHEMISCHE ZUSAMMENSETZUNGEN
COMPOSITION AGROCHIMIQUE

(30) Priority: 21.12.2018 EP 18215405; 09.09.2019 EP 19196194
(43) Date of publication of application: 27.10.2021
(60) Divisional application: 22213800.0
(73) Proprietor: Battelle UK Limited, Chelmsford Essex CM2 5LB (GB)
(72) Inventor: CLAPPERTON, Richard M., Southampton Hampshire SO32 2NS (GB)
(74) Representative: Hoffmann Eitle
(86) International application number: PCT/EP2019/086615
(87) International publication number: WO 2020/127931

(56) References cited:
- WO-A1-2018/231567
- US-A1- 2010 160 168
- US-B1- 6 204 223
- US-B1- 6 849 577
- US-B2- 10 091 994

## Description

### 1. Field of the invention

This invention relates to liquid agrochemical compositions. More specifically, the invention relates to an aqueous agrochemical composition comprising an electrolytic agrochemical dissolved in an aqueous phase, and an agrochemical suspended in the aqueous phase.

### 2. Background of the invention

Agrochemicals can be formulated as concentrates in a variety of different forms, including solid compositions such as wettable powders and granules, as well as liquid compositions such as emulsifiable concentrates. Liquid compositions offer advantages over solid compositions because they are more easily measured and poured, and when diluted with water typically leave fewer residues in any equipment that is used to prepare and apply the agrochemical.

For agrochemicals that are insoluble or not fully soluble in water, it is typical to prepare liquid compositions by dissolving the agrochemical in an organic water-immiscible solvent, such as an aromatic hydrocarbon or a more polar ester solvent. However, the use of organic solvents in preparing liquid compositions is oftentimes undesirable, both ecologically and from the standpoint of human safety. Therefore, where possible, it is preferable to minimise the amount of organic solvent in liquid agrochemical compositions. In addition, many agrochemicals are electrolytes, which, whilst water-soluble, have insufficient solubility in organic solvents to enable an organic solution to be formulated.

Aqueous liquid compositions of agrochemicals can be prepared. In the case of water-soluble agrochemicals, the agrochemical can be dissolved in the aqueous phase. If the agrochemical is not soluble in water, it can be suspended as solid particles or as liquid droplets (e.g. oil-in-water emulsion). To suspend particles or droplets it is necessary to incorporate an anti-settling system of some kind, typically a water-swellable clay (e.g. attapulgite) or a water soluble polymer (e.g. xanthan gum). The inventors have found that structured surfactants (i.e. surfactant phases which impart anti-settling characteristics to the aqueous phase) can be used to suspend particles and droplets. An advantage of using a structured surfactant to suspend an agrochemical is that the surfactants can also act as adjuvants. Surfactant adjuvants are frequently employed with agrochemicals, either by incorporation into the agrochemical formulation or as a `tank mix' component with the agrochemical prior to application, improving the biological effectiveness of the agrochemical when it is applied. Adjuvants that are 'built-in' to the formulation can also reduce storage and transport costs. Where it is desirable to include more than one agrochemical in a liquid composition, one or more agrochemicals can be dissolved in the aqueous phase and one or more agrochemicals can be suspended in the aqueous phase.

In the case of aqueous liquid compositions, a problem arises if one wishes to include a suspended agrochemical and at the same time include an electrolyte agrochemical. The inventors have found that electrolyte agrochemicals tend to cause conventional suspending clays and polymers to become significantly less effective as anti-settling aids, with the reduction in suspension ability increasing as the concentration of dissolved electrolyte increases. The inventors found that some surfactant combinations can produce a suspending structure at low electrolyte concentrations (e.g. 10 wt.% electrolyte) but then fail if a high concentration of the electrolyte agrochemical is used. Thus, it is an object of this invention to solve this problem and provide aqueous agrochemical compositions which can accommodate a comparatively high concentration of electrolyte agrochemical while at the same time allow other agrochemicals to be suspended therein. It would be an advantage to be able to combine high concentrations of dissolved electrolyte agrochemicals with suspended solid or liquid agrochemicals in the presence of surfactants by selecting surfactants that ensure good suspension and pourability of the liquid formulation over the temperature range required for storage (typically -10°C to 40°C). Combinations of agrochemicals can give additive properties of each separate agrochemical and high concentration reduces packaging and transport costs. The incorporation of surfactant to suspend the solid or liquid agrochemical particles removes the need for other anti-settling aids which have little or no benefit to biological effectiveness when the product is applied.

WO 2018/231567 A1 describes an agrochemical concentrate that comprises lecithin and at least one agrochemical active. The agrochemical concentrate may also comprise a dispersant selected from sucrose ester, alkylpolyglucoside, alkylnaphthalene sulphonate, phosphate ester, sorbitol ester, polyglycerol ester, alkyl sulphates, sodium lauryl sulphate, alkylglucamides, and dialkyl sulphosuccinates. An aqueous formulation comprises a dilution of the agrochemical concentrate in an electrolyte. A pre-blend comprises lecithin and a dispersant.

US 6,849,577 B1 describes an aqueous agrochemical concentrate formulation that comprises: a) an agrochemical electrolyte such as glyphosate; b) a water-insoluble agrochemical system such as diuron; c) an alkylglycoside; and d) a co-surfactant which interacts with the alkylglycoside to form a structured aqueous system. Examples of the co-surfactant include: i) a linear or branched chain aliphatic or aromatic alcohol; ii) an alcohol alkoxylate or ester alkoxylate or alkyl phenol alkoxylate; iii) a glyceryl alkyl or alkenyl ester; and iv) a sorbitan alkyl or alkenyl ester. The composition optionally contains an additional ionic surfactant.

US 6,204,223 B1 describes an agrochemical composition packaged in a water-soluble or water-dispersible sachet. The agrochemical composition is comprised of a water-soluble, agrochemically active agent, water and an agent to minimize water loss through the walls of the sachet, wherein the agent is an ester of an alkyl, alkenyl, aryl, or arylalkyl acid; an ester or a naturally occurring oil; or a mineral or a synthetic oil; provided that the agent is not dibutylphtalate.

### 3. Summary of the invention

The inventors have discovered a surfactant system that is capable of suspending agrochemicals in water and of giving good pourability over the temperature range required for storage (-10°C to 40°C), even in the presence of 20 wt.% or more of a dissolved electrolyte agrochemical based on the total weight of water in the composition.

The invention provides a liquid agrochemical composition comprising:
(i) water in an amount of 30 wt.% or more based on the total weight of the liquid agrochemical composition:
(ii) one or more electrolyte agrochemicals dissolved in the water, wherein the total amount of electrolyte agrochemicals dissolved in the water is 20 wt.% or more based on the total weight of water in the liquid agrochemical composition;
(iii) a surfactant system comprising:
   (a) 2.0 to 6.0 wt.% of an alkylpolyglucoside surfactant based on the total weight of the liquid agrochemical composition; and
   (b) 2.0 to 6.0 wt.% of a co-surfactant based on the total weight of the liquid agrochemical composition, wherein the co-surfactant is one or more surfactants represented by Formulae 9 to 14 below; and
(iv) one or more agrochemicals suspended in the water: 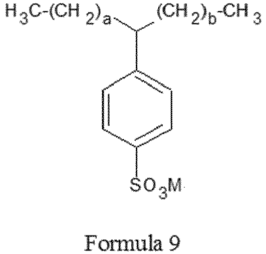 wherein
   for Formula 9: M is a cation, preferably H⁺, Na⁺, K⁺, Ca²⁺, NH₄⁺, or NH₃iPr⁺; and
   'a' and 'b' are the same or different and are selected to be an integer from 0 to 11, provided that a+b is from 7 to 11; 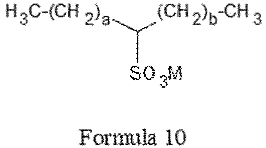 wherein
   for Formula 10: M is a cation, preferably H⁺, Na⁺, K⁺, Ca²⁺, NH₄⁺, or NH₃iPr⁺; and
   'a' and 'b' are the same or different and are selected to be an integer from 0 to 11, provided that a+b is from 9 to 16; 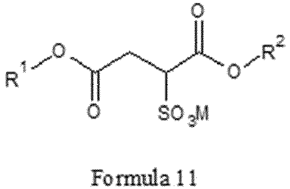 wherein
   for Formula 11: M is cation, preferably H⁺, Na⁺, K⁺, Ca²⁺, NH₄⁺, or NH₃iPr⁺; and
   R¹ and R² are the same or different and are selected to be a C6 to C10 straight chain alkyl group; and 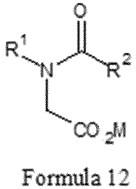 wherein
   for Formula 12: M is cation, preferably H⁺, Na⁺, K⁺, Ca²⁺, NH₄⁺, or NH₃iPr⁺; and
   R¹ and R² are the same or different and are selected to be a C1 to 16 straight chain alkyl group, provided that together R¹ and R² provide 6 to 18 carbon atoms; 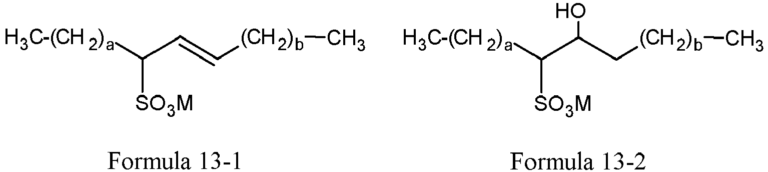 wherein
   for Formula 13-1 and 13-2: M is a cation, preferably H⁺, Na⁺, K⁺, Ca²⁺, NH₄⁺, or NH₃iPr⁺; the dotted line represents an optional double bond; 'a' and 'b' are the same or different and are selected to be an integer from 0 to 11, provided that a+b is from 9 to 14; 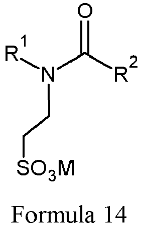 wherein
   for Formula 14: M is cation, for example H⁺, Na⁺, K⁺, Ca²⁺, NH₄⁺, or NH₃iPr⁺, and R¹ and R² are the same or different and are selected to be a C1 to 20 straight chain alkyl or alkenyl group, provided that together R¹ and R² provide 6 to 20 carbon atoms.

### 4. Description of the invention

### 4.1 General remarks

As used herein, the terms "comprises", "comprising", "includes", "including", "has", "having" or any other variation thereof, are intended to cover a non-exclusive inclusion. For example, a composition that comprises a list of components is not necessarily limited to only those components but may include other components that are not expressly listed or inherent to such a composition. That said, the terms "comprises", "comprising", "includes", "including", "has", "having" or any other variation thereof also cover the disclosed embodiment having no further additional components (i.e. consisting of those components).

Also, the indefinite articles "a" and "an" preceding an element or component of the invention are intended to be non-restrictive regarding the number of instances (i.e. occurrences) of the element or component. Therefore "a" or "an" should be read to include one or at least one, and the singular word form of the element or component also includes the plural unless the number is obviously meant to be singular.

### 4.2 Liquid composition

The agrochemical composition of the invention is a liquid. The term "liquid" is used throughout this disclosure to mean that the composition or ingredient in question takes the form of a liquid at standard temperature and pressure. Liquid agrochemical compositions are well-known in the art. For examples of such, reference is made to the "Catalogue of pesticide formulation types and international coding system", Technical Monograph No. 2, 7th Ed. Revised March 2017, CropLife International. Any of the liquid compositions that are disclosed therein in which at least one agrochemical is dissolved in an aqueous phase and at least one agrochemical is suspended in the aqueous phase can be used for the present invention. By way of example, the liquid composition can take the form of a capsule suspension (CS), and oil-in-water emulsion (EW), a suspension concentrate (SC), a suspension concentrate for direct application (SD), a suspo-emulsion (SE), a mixed formulation of CS and SE (ZE), or a mixed formulation of CS and EW (ZW).

The liquid composition of the present invention is aqueous. By "aqueous" is meant that water is present as the continuous phase of the composition. Other water-miscible liquid solvents may be present, provided that their combined weight is less than the total weight of water in the composition. Preferably a mixture of water and such water-miscible liquid solvents comprises 60 wt.% or more of water, more preferably 70 wt.% or more of water, still more preferably 80 wt.% or more of water and even more preferably 90 wt.% or more of water, based on the combined weight of water and water-miscible liquid solvents. In another embodiment, the composition comprises 20 wt.% or less of water-miscible solvents other than water in the continuous phase, more preferably 10 wt.% or less, and even more preferably 5 wt.% or less, based on the combined weight of water and water-miscible liquid solvents. In a preferred embodiment, water is the only solvent used in the continuous phase of the composition.

The total amount of water that is present in the composition is 30 wt.% or more based on the total weight of the liquid agrochemical composition, preferably 35 wt.% or more and most preferably 40 wt.% or more. Water is preferably present in the composition in an amount of 75 wt.% or less based on the total weight of the liquid agrochemical composition, more preferably 70 wt.% or less, still more preferably 65 wt.% or less, more preferably 60 wt.% or less, and most preferably 50 wt.% or less. Any of the lower wt.% values can be combined with any of the upper wt.% values to provide preferably ranges for the amount of water in the composition. Preferable ranges include 30 to 75 wt.%, 35 to 70 wt.%, 35 to 65 wt.%, 40 to 60 wt.% and 40 to 50 wt.%.

### (ii) Electrolyte agrochemical dissolved in the water

The term "*electrolyte agrochemical*" means an agrochemical that will form ions if it is dissolved in water at 20°C. The term "*agrochemical*" as used herein (including for the suspended agrochemical described later) means any chemical that can kill, repel or inhibit the growth or reproduction of unwanted organisms ("pests"), or any chemical which can protect or promote the healthy growth or reproduction of wanted organisms such as crops, ornamental plants, livestock and domestic animals, and which are useful in agriculture, horticulture, forestry, animal husbandry, water treatment and land management, e.g. for application to fields, crops, orchards, livestock, gardens, woodland, hedgerows, parks, industrial estates, construction sites, airports, roads, railways, rivers, lakes, ponds, canals, irrigation and drainage works.

The electrolyte agrochemical can be a pesticide such as a herbicide, a fungicide, or an insecticide. The electrolyte agrochemical can be a plant growth regulator, or a fertilizer such as a water-soluble inorganic fertilizer or a water-soluble organic fertilizer. For the purpose of the present invention, the electrolyte agrochemical is preferably a herbicide.

In the present invention, one or more electrolyte agrochemicals are dissolved in the water that is contained in the liquid agrochemical composition. The total amount of electrolyte agrochemicals dissolved in the water is 20 wt.% or more based on the total weight of water in the liquid agrochemical composition. One advantage of the present invention is that the liquid composition can accommodate a higher amount of electrolyte agrochemical while still providing a stable structured surfactant system to suspend other agrochemicals. For reasons of economy (e.g. reduced packaging; reduced storage and transport costs), the total amount of electrolyte agrochemical can be made as close to saturation as possible as this gives the highest concentration of the material in the formulation. If the composition is to be stored and/or used at reduced temperatures, appropriate consideration of the lower saturation at such temperatures should be taken into account to avoid undesirable precipitation. The total amount of electrolyte agrochemical dissolved in the water is preferably 30 wt.% or more (based on the total weight of water in the liquid agrochemical composition) and may be present in an amount of 40 wt.% or more, 50 wt.% or more or 60 wt.% or more. The upper limit for the total amount of electrolyte agrochemical dissolved in the water is limited only by the amount of the agrochemical that the water can dissolve for the system in question. The total amount of electrolyte agrochemical dissolved in the water is preferably 100 wt.% or less (based on the total weight of water in the liquid agrochemical composition) and may be present in an amount of 90 wt.% or less, 80 wt.% or less, or 70 wt.% or less. Any of the lower wt.% values can be combined with any of the upper wt.% values to provide preferable ranges for the total amount of electrolyte agrochemical based on the total weight of water in the liquid agrochemical composition. Exemplary ranges include 30 to 100 wt.%, 40 to 90 wt.%, 40 to 80 wt.%, 30 to 60 wt.%, and 40 to 60 wt.%. The wt.% amounts above refer to the electrolyte agrochemical per se and not to any other entity that it may be associated with (e.g. a base). By way of illustration, if glyphosate is added as glyphosate-potassium, the wt.% amounts above refer to glyphosate and not to the glyphosate potassium salt.

Among the water-soluble herbicides that form electrolyte solutions in water are those listed in the Pesticide Manual (British Crop Protection Council; 16th edition). Examples of such herbicides include: acifluorfen-sodium, aminopyralid-triisopropanolammonium, amitrole, ammonium sulfamate, asulam-sodium, bentazone-sodium, bilanifos-sodium, bispyrabac-sodium, sodium metaborate, bromacil-lithium, bromoxynil-potassium, sodium chloroacetate, agrochemically acceptable salts of clopyralid, 2,4-D-dimethylammonium, 2,4-D-triethanolammonium, 2,4-D-triisopropylammonium, 2,4-DB-dimethylammonium, 2,4-DB-sodium, 2,4-DB-potassium, dicamba diglycolamine salt, dicamba-dimethylammonium, dicamba-diethanolammonium, dicamba-isopropylammonium, dicamba-potassium, dicamba-sodium, dicamba-triethanolammonium, difenzoquat metilsulfate, diflufenzopyr-sodium, endothal-mono (N,N-dimethylalkylammonium), flupropanate-sodium, fomesafen-sodium, fosamine-ammonium, glufosinate-ammonium, glyphosate-isopropylammonium, glyphosate-potassium, glyphosate-sesquisodium, glyphosate diammonium, glyphosate dimethylammonium, glyphosate-ammonium, imazamox, imazamox-ammonium, imazapic-ammonium, imazapyr-isopropylammonium, imazaquin-ammonium, imazethapyr-ammonium, ioxynil-sodium, MCPA-sodium, MCPA-potassium, MCPA-dimethylammonium, MCPB-sodium, MCPB-potassium, mecoprop-sodium, mecoprop-potassium, mecoprop-P dimethylammonium, mecopropo-P-potassium, metam-sodium, metam-potassium, picloram-potassium, picloram-dimethylammonium, picloram-triethylammonium, picloram-triisopropylammonium, picloram-triethanolammonium, propoxycarbazone-sodium, pyrithiobac-sodium, sodium chlorate, triclopyr-triethylammonium, dichlorprop-potassium, dichlorprop-P-dimethylammonium, dichlorprop-P-potassium, dichlorprop-P-sodium and urea sulfate. Preferred water-soluble electrolyte herbicides are selected from the following list: 2,4-D-dimethylammonium; 2,4-D-triethanolammonium; 2,4-D-triisopropylammonium; 2,4-DB-dimethylammonium; 2,4-DB-sodium and potassium; dicamba diglycolamine salt; dicamba-dimethylammonium; dicamba-diethanolammonium; dicamba-isopropylammonium; dicamba-potassium; dicamba-sodium; dicamba-triethanolammonium; glufosinate-ammonium; glyphosate-isopropylammonium; glyphosate-potassium; glyphosate-sesquisodium; glyphosate diammonium; glyphosate dimethylammonium; glyphosate-ammonium; MCPA-sodium; MCPA-potassium; MCPA-dimethylammonium; MCPB-sodium; MCPB-potassium; dichlorprop-potassium; dichlorprop-P-dimethylammonium; dichlorprop-P-potassium; and dichlorprop-P-sodium.

The most preferred water-soluble electrolyte herbicides are glyphosate (N-(phosphonomethyl)glycine), glufosinate ((RS)-2-Amino-4-(hydroxy(methyl)phosphonoyl)-butanoic acid), 2,4-D ((2,4-Dichlorophenoxy)acetic acid), and dicamba (3,6-Dichloro-2-methoxybenzoic acid), and their agrochemically acceptable salts. The well-known and widely used broad spectrum glyphosate type of herbicides are N-phosphono-methyl-N-carboxyalkyl compounds, particularly N-phosphonomethyl glycines, usually as a water-soluble agrochemically acceptable salt, commonly alkali metal e.g. sodium or potassium or trimethylsulphonium, isopropylamine, ammonium, diammonium, dimethylamine or triethanolamine salt. The glufosinate type of herbicides are phosphinyl amino acids such as glufosinate [2-amino-4-(hydroxymethylphosphinyl) butanoic acid], particularly useful as the ammonium salt. For both the glyphosate and glufosinate types of herbicide, the main active component is present in aqueous solution as an anion (or overall negatively charged zwitterion). 2,4-D can be used as its dimethylamine or choline salt, and dicamba can be used as its diglycolamine, dimethlyammonium, isopropylamine, potassium or sodium salt. When the electrolyte agrochemical is glyphosate, or a salt thereof, it is preferably present in the composition in an amount of 20 to 40 wt.% glyphosate based on the total weight of the composition.

Among water-soluble fungicides and/or insecticides that form electrolyte solutions in water are those listed in the Pesticide Manual (British Crop Protection Council; 16th edition). Examples of such include: sodium or potassium bicarbonate, GY-81, metam-sodium, metam-potassium, and phosphonic acid.

Among water-soluble plant growth regulators that form electrolyte solutions in water are those listed in the Pesticide Manual (British Crop Protection Council; 16th edition). Examples of such plant growth regulators include: S-abscisic acid, aviglycine hydrochloride, chlormequat chloride, cloxyfonac-sodium, dichlorprop-potassium, dichlorprop-P-dimethylammonium, dichlorprop-P-potassium, dichlorprop-P-sodium, gibberellic acid, GA3, 4 or 7, maleic hydrazide potassium salt,mepiquat chloride, and sodium nitrophenolate. Preferred plant growth regulators include dikegulac-sodium, ammonium 1-naphthylacetic acid, sodium 1-naphthylacetic acid, and potassium 1-naphthylacetic acid.

Among water-soluble fertilisers that form electrolyte solutions in water are the common water soluble inorganic fertilizers that provide nutrients such as nitrogen, phosphorus, potassium or sulphur. Examples of such fertilizers include:
for nitrogen as the nutrient: nitrates and or ammonium salts such as ammonium nitrate, calcium ammonium nitrate (in the solid form: [Ca(NO₃)₂]₅.NE₄(NO₃)₂.10H₂O), ammonium sulphate nitrate, ammonium phosphates, particularly mono-ammonium phosphate (NH₄H₂PO₄), di-ammonium phosphate ([NH₄]₂HPO₄), and ammonium polyphosphate, ammonium sulphate, and the less commonly used calcium nitrate, sodium nitrate, potassium nitrate and ammonium chloride;
for potassium as the nutrient: potassium chloride, potassium sulphate, for example as the mixed sulphate with magnesium (K₂SO₄.MgSO₄), potassium phosphates, particularly potassium dihydrogen phosphate (KH₂PO₄) and potassium polyphosphate (commonly given the formula (KPO₂)ₓ) and less commonly potassium nitrate;
for phosphorus as the nutrient: acidic forms of phosphorus such as phosphoric, pyrophosphoric or polyphosphoric acids can be used, but are not particularly preferred because of their acidity and corrosiveness, and salt forms will usually be preferred such as ammonium phosphates, particularly mono-ammonium phosphate, di-ammonium phosphate, and ammonium polyphosphate, potassium phosphates, particularly potassium dihydrogen phosphate and potassium polyphosphate;
for sulphur as the nutrient: ammonium sulphate and potassium sulphate, e.g. the mixed sulphate with magnesium.

Other water soluble nutrient containing compounds (commonly identified as "micronutrients") may also be included in the compositions e.g. to provide minor or trace nutrients to the formulation. Similarly, water soluble buffering and chelating agents such as ammonium and alkali metal citrates, gluconates, lactates, and polyacrylates may be included as part or all of the electrolyte component of the formulation.

Combinations of water-soluble electrolyte agrochemicals with other water-soluble electrolyte agrochemicals can be used in the invention and it is preferable to combine herbicide with herbicide, fungicide with fungicide, plant growth regulator with plant growth regulator, etc.). Suitable herbicide combinations include: acifluorfen-sodium with bentazone-sodium; clopyralid potassium with MCPA potassium; 2,4-D-dimethylammonium with MCPA-dimethylammonium; 2,4-D-triethanolammonium,with MCPA-sodium; 2,4-D-triisopropylammonium with MCPA-potassium; 2,4-DB-sodium with MCPA-sodium and/or MCPA-potassium; 2,4-DB-potassium with MCPA-sodium and/or MCPA-potassium; dicamba-potassium with glyphosate-potassium; diflufenzopyr-sodium with dicamba-sodium; glufosinate-ammonium with MCPA salts such as MCPA-sodium or MCPA-potassium; glufosinate-ammonium with dicamba-isopropylammonium; dicamba diglycolamine salt with glyphosate diammonium; dicamba-triethanolammonium with glyphosate-isopropylammonium; dicamba-dimethylammonium with glyphosate dimethylammonium; dicamba-diethanolammonium with glyphosate-diammonium; dicamba-sodium with glyphosate-sodium; dichlorprop-P-dimethylammonium with MCPA-dimethylammonium; glyphosate-isopropylammonium or glyphosate-isopropylamine with glufosinate-ammonium; imazaquin-ammonium with chlormequat chloride; ioxynil-sodium with mecoprop-sodium and/or MCPA-dimethylammonium; MCPA-sodium with other MCPA salts (e.g. MCPA-potassium or MCPA-dimethylammonium), 2,4-DB potassium, and/or 2,4-DB sodium; MCPA-potassium with other MCPA salts (e.g. MCPA sodium), 2,4-DB potassium, and/or and 2,4-DB sodium; MCPA-dimethylammonium with other MCPA salts (e.g. MCPA-sodium or MCPA-potassium); MCPB-sodium with MCPB-potassium; 2,4-DB dimethylammonium, and/or ioxynil-sodium; mecoprop-P dimethylammonium with dichlorprop-P-dimethylammonium and/or MCPA-dimethylammonium.

Suitable plant growth regulator combinations include: sodium 1-naphthylacetic acid with sodium nitrophenolate; or chlormequat chloride with imazaquin-ammonium. A suitable plant growth regulator and herbicide combination is sodium 1-naphthylacetic acid with 2,4-D-sodium. Other combinations of water-soluble electrolyte plant growth regulators and other water-soluble electrolyte agrochemicals include: dichlorprop-P-dimethylammonium with MCPA-dimethylammonium and/or mecoprop-P-dimethylammonium; and gibberellic acid GA4 with glufosinate-ammonium.

### (iii) Surfactant system

The composition comprises a surfactant system which forms vesicles in the aqueous phase, preferably multilamellar vesicles (spherulites). These vesicles allow an agrochemical to be suspended in the composition by forming a close-packed structure that provides the liquid with the rheological properties required to suspend solid particles or liquid droplets. The surfactant system comprises (a) an alkylpolyglucoside surfactant and (b) a co-surfactant that is one or more surfactants represented by Formulae 9 to 14 below. The present invention is based on the surprising discovery that a surfactant system based on a combination of (a) and (b) will allow vesicles to be formed in the presence of a large amount of electrolyte agrochemical and that vesicles can suspend solid particles and liquid droplets when stored over a wide temperature range, typically from -10°C to 40°C.

In surfactant systems of the prior art, typically, when a large amount of electrolytic agrochemical is dissolved in the aqueous system, it becomes difficult if not impossible to combine surfactants in a way that can suspend other components such as a second agrochemical. In the presence of a high amount of electrolyte, in most surfactant combinations the surfactant combination is wholly or partially insoluble and separates out from the aqueous solution on storage or the surfactant combination becomes completely soluble, forming micellar solution, which is incapable of suspending particles.

For example, US 2010/0160168 A1 describes a homogenous liquid agrochemical concentrate. The surfactant system used therein forms a microemulsion (hence the homogeneity) which, being not a structured surfactant system, is incapable of suspending e.g. solids in the composition. US 10, 091, 994 B2 describes a surfactant, the salt of which is reported to retain activity of the surfactant while avoiding problems with gelation in the formulation. There is no indication in this document about which surfactant systems can be used to suspend e.g. solids in an aqueous formulation that contains a comparatively high amount of electrolyte agrochemical.

The problems discussed further above, and the problems in the prior art mentioned immediately above are overcome by using a surfactant system in accordance with the invention based on a combination of (a) an alkylpolyglucoside surfactant and (b) a co-surfactant that is one or more surfactants represented by Formulae 9 to 14 below. The present invention is also advantageous in that the surfactants used are environmentally friendly, unlike surfactants used in the prior art such as the cationic hexadecylammonium chloride.

### (a) Alkylpolyglucoside surfactant

Alkylpolyglucosides are a group of substances consisting of a chain of rings of a sugar linked to each other with glucosidic bonds in which the last ring of the glucosidic chain is acetalized with an alcohol. Particularly preferred for this invention are alkylpolyglucosides of Formula (I):

Formula (I): H-(G)ₙ-O-R

where G represents a radical resulting from the, removal of a molecule of H₂O from a monosaccharide, typically a hexose having the formula C₆H₁₂O₆ or a pentose having the formula C₅H₁₀O₅;
'n' is between 1 and 5; and
R represents an alkyl radical, linear or branched, saturated or unsaturated, having a number of carbon atoms ranging from 8 to 20.

Alkylpolyglucosides are usually mixtures of alkyl monoglucoside (e.g. alkyl-α-D- and -β-D-glucopyranoside, optionally containing smaller amounts of -glucofuranoside), alkyl diglucosides (e.g.-isomaltosides, -maltosides etc.) and alkyl oligoglucosides (e.g.-maltotriosides, -tetraosides etc.). Preferred alkylpolyglucosides for the present invention are C4-18-alkylpolyglucosides (i.e. where R in Formula (I) above is a 4 to 18 alkyl group), more preferably C6-14-alkyl polyglucosides, and in particular C6-12-alkylpolyglucosides. The alkylpolyglucosides may have a degree of polymerization of from 1.2 to 1.9 (i.e. 'n' in Formula 1 is from 1.2 to 1.9). More preferred are C6-10-alkylpolyglucosides where 'n' is from 1.4 to 1.9. The alkylpolyglucosides preferably have a HLB value of 11.0 to 15.0, and may have a HLB value of 12.0 to 14.0.

The total amount of alkylpolyglucoside surfactant present in the composition is 2.0 wt.% or more, still more preferably 3.0 wt.% or more and most preferably 3.5 wt.% or more. The total amount of alkylpolyglucoside surfactant is present in the composition is 6.0 wt.% or less or 4.0 wt.% or less. Any of the lower wt.% values can be combined with any of the upper wt.% values to provide preferable ranges for the amount of alkylpolyglucoside surfactant. Exemplary ranges include 3.0 to 6.0 wt.% and 2.0 to 4.0 wt.%. When the electrolytic herbicide is glyphosate, or a salt thereof, the total amount of the alkylpolyglucoside surfactant is preferably present in an amount of 3.5 to 6.0 wt.% based on the weight of the liquid agrochemical composition. Commercial examples of alkylpolyglucoside surfactants include Agnique PG series (BASF), AL-2559 and AL-2575 (Croda).

### (b) Co-surfactant

The co-surfactant comprises an anionic head group and a tail group, wherein the tail group comprises at least two alkyl groups. The term "co-surfactant" means that the surfactant works together with the aforementioned alkylpolyglucoside surfactant so as to form vesicles by which other agrochemicals can be suspended. The term "head group" in the present invention means a functional group, e.g., the functional group SO₃M or CO₂M in Formulae 9 to 14 below. The head group is negatively charged when dissolved in water and, subject to Formulae 9 to 14 below, can be positioned on any part of the molecule. The head group is the hydrophilic part of the molecule. The term "tail group" takes its ordinary meaning in the art and in the case of the present invention represents the hydrophobic part of the molecule. The "tail group" comprises at least two alkyl groups.

The co-surfactant for use in the present invention can also be represented by Formula 9 below where M is cation, for example H⁺, Na⁺, K⁺, NH₄⁺, NH₃iPr⁺, or Ca²⁺, and 'a' and 'b' are the same or different and are selected to be an integer from 0 to 11, provided that a+b is from 7 to 11. If M is Ca²⁺, the surfactant has two of the anionic counterions depicted in Formula 9. A preferred embodiment of Formula 9 is where a+b is 9. Commercially available surfactants according to Formula 9 include Nansa^{®} HS80S (Innospec) and Biosoft^{®} 411-E (Stepan).

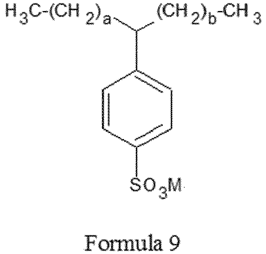

The co-surfactant for use in the present invention can also be represented by Formula 10 below where M is cation, for example H⁺, Na⁺, K⁺, Ca²⁺, NH₄⁺, or NH₃iPr⁺, and 'a' and 'b' are the same or different and are selected to be an integer from 0 to 11, provided that a+b is from 9 to 16. A preferred embodiment of Formula 10 is where a+b is 11 to 14. A commercially available surfactant according to Formula 10 includes Hostapur^{®} SAS93 (Clariant).

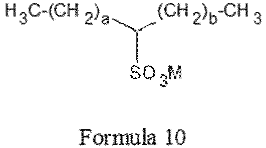

The co-surfactant for use in the present invention can also be represented by Formula 11 below where M is cation, for example H⁺, Na⁺, K⁺, Ca²⁺, NH₄⁺, or NH₃iPr⁺, and R¹ and R² are the same or different and are selected to be a C6 to C10 straight chain alkyl group. A preferred embodiment of Formula 11 is where R¹ and R² are both a C8 straight chain alkyl group. A commercially available surfactant according to Formula 11 includes Aerosol^{®} OT-100 (Cytec Solvay).

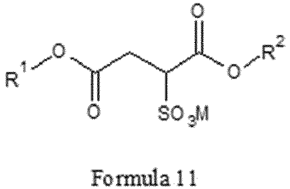

The co-surfactant for use in the present invention can also be represented by Formula 12 below where M is cation, for example H⁺, Na⁺, K⁺, Ca²⁺, NH₄⁺, or NH3iPr⁺, and R¹ and R² are the same or different and are selected to be a C1 to 16 straight chain alkyl group, provided that together R¹ and R² provide 6 to 18 carbon atoms. A preferred embodiment of Formula 12 is where R¹ is a C1-C4 straight chain alkyl group and R² is a C5 to C14 straight chain alkyl group. A more preferable embodiment of Formula 12 is where R¹ is Me and R² is a C5 to C14 straight chain alkyl group, preferably R² is a C9 to C13 straight chain alkyl group, and most preferably a C11 straight chain alkyl group. Commercially available surfactants according to Formula 12 include Crodasinic^{®} LS30, Crodasinic^{®} MS30, and Crodasinic^{®} O (Croda).

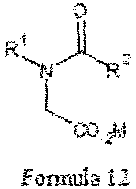

Subject to the appended claims, suitable co-surfactants for use in the present invention also include those disclosed on pages 5 to 18 of WO 2017/100051 A1.

The co-surfactant for use in the present invention can also be represented by Formula 13-1 or Formula 13-2 below, preferably a mixture of Formula 13-1 and 13-2, where M is cation, for example H⁺, Na⁺, K⁺, Ca²⁺, NH₄⁺, or NH₃iPr⁺, 'a' and 'b' are the same or different and are selected to be an integer from 0 to 11, provided that a+b is from 9 to 14. A preferred embodiment of Formula 13-1 and 13-2 and mixtures thereof is where a+b is 11 to 13. A still further preferred embodiments is where a is from 6 to 8 and b is from 5 to 7. A still further preferred embodiments is where a is 7 and b is 6. Surfactants according to Formula 13-1 and 13-2 are described on pages 6 to 8 of WO 2017/100051 A1 and are available commercially from Shell under the Enordet^{™} mark.

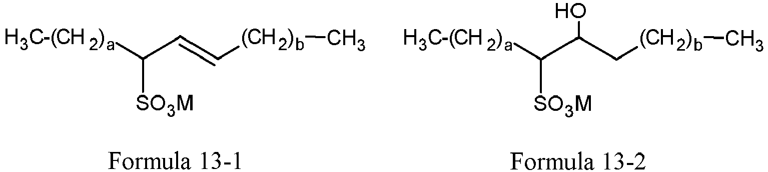

The co-surfactant for use in the present invention can also be represented by Formula 14 below where M is cation, for example H⁺, Na⁺, K⁺, Ca²⁺, NH₄⁺, or NH₃iPr⁺, and R¹ and R² are the same or different and are selected to be a C1 to 20 straight chain alkyl or alkenyl groups, provided that together R¹ and R² provide 6 to 20 carbon atoms. A preferred embodiment of Formula 14 is where R¹ is a C1-C4 straight chain alkyl group and R² is a C5 to C19 straight chain alkyl or alkenyl group. A more preferable embodiment of Formula 12 is where R¹ is Me and R² is a C5 to C19 straight chain alkenyl group, preferably R² is a C13 to C19 straight chain alkenyl group, and most preferably a C17 straight chain alkenyl group. A commercially available surfactant according to Formula 14 includes Adinol^{®} OT-72 (Croda).

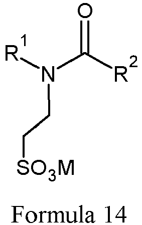

The total amount of co-surfactant (b)is 2.0 wt.% or more, still more preferably 3.0 wt.% or more and most preferably 3.5 wt.% or more based on the weight of the liquid agrochemical composition. The total amount of co-surfactant (b) is 6 wt.% or less, or 5 wt.% or less based on the weight of the liquid agrochemical composition. Any of the lower wt.% values can be combined with any of the upper wt.% values to provide preferable ranges for the amount of co-surfactant (b) in the liquid agrochemical composition. An exemplary range includes 3.0 to 5.0 wt.%. When the electrolytic herbicide is glyphosate, or a salt thereof, the total amount of co-surfactant (b) in the liquid agrochemical composition is preferably from 3.0 to 5.0 wt.% based on the total weight of the composition.

The weight ratio of the total amount of alkylpolyglucoside surfactant (a) to the total amount of co-surfactant (b) is preferably 0.3 or more, more preferably 0.7 or more, still more preferably 1.0 or more and most preferably 1.1 or more in terms of improving stability. The weight ratio of the total amount of the surfactant (a) to the total amount of co-surfactant (b) is preferably 3.0 or less, still more preferably 1.5 or less and most preferably 1.2 or less in terms of maintaining reduced viscosity (and hence better pouring ability). Any of the lower ratio values can be combined with any of the upper ratio values to provide preferable ranges for the ratio of the total amount of the aforementioned surfactant (a) to the total amount of co-surfactant (b). Exemplary ranges include 0.3 to 3.0, 0.7 to 1.5, 0.7 to 1.0, 1.0 to 1.2, and 1.0 to 1.5.

### (iv) Agrochemical suspended in the liquid composition

The liquid agrochemical composition of the invention comprises at least one agrochemical suspended in the composition. The suspended agrochemical is not particularly limited and may be any agrochemical that would be desirable to formulate together with the electrolyte agrochemical that is dissolved in the liquid composition. The suspended agrochemical may be in solid (e.g. as solid particles) or liquid form (e.g. as droplets of agrochemical or agrochemical dissolved in a water- immiscible liquid).

Examples of suitable agrochemicals that can be suspended in the liquid agrochemical composition of the invention include solid herbicides such as beflubutamid, benazolin, benzofenap, bifenox, bromobutide, chloridazon, chlorotoluron, chlorthal-dimethyl, cloransulam-methyl, desmedipham, diclosulam, esprocarb (or as capsule suspension), fentrazamide, flumetsulam, flurtamone, ioxynil, isoproturon, isouron, isoxaben, isoxaflutole, lenacil, linuron, mefenacet, metazachlor, metoxuron, metribuzin, oryzalin, oxadiargyl, oxadiazon, penoxsulam, pentoxazone, prodiamine, prometon, propyzamide, pyraflufen-ethyl, pyrazoxyfen, pyributicarb, pyriftalid, pyriminobac-methyl, pyroxsulam, quinclorac, quinmerac, trialkoxydim, simetryn, sulcotrione, sulfentrazone, terbuthylazine, terbutryn, and thenylchlor. Preferred solid herbicides include amidosulfuron, atrazine, azimsulfuron, bensulfuron-methyl, benzobicyclon, bromoxynil, butafenacil, chlorimuron-ethyl, chlorsulfuron, cinosulfuron, diflufenican, diuron, ethofumasate, ethoxysulfuron, flazasulfuron, florasulam, flucarbazone-sodium, flufenacet, foramsulfuron, flupyrsulfuron-methyl-sodium, halosulfuron-methyl, haloxyfop-P, imazapic, imazosulfuron, iodosulfuron-methyl-sodium, mesosulfuron-methyl, mesotrione, metamitron, metolachlor, S-metolachlor, metsulfuron-methyl, nicosulfuron, orthosulfamuron, oxasulfuron, pendimethalin, phenmedipham, picolinafen, primisulfuron-methyl, propachlor, prosulfuron, pyrazosulfuron-ethyl, quizalofop-P, rimsulfuron, saflufenacil, simazine, sulfometuron-methyl, sulfosulfuron, thifensulfuron-methyl, tribenuron-methyl, trifloxysulfuron, triflusulfuron-methyl, tritosulfuron.

Examples of suitable liquid herbicides that can be suspended in the liquid agrochemical composition include carfentrazone-ethyl and cinmethylin. Preferred liquid herbicides include acetochlor and butachlor.

In one embodiment of the invention, the electrolyte herbicide is glyphosate and the herbicide to be suspended is selected from any one of the herbicides mentioned above. In another embodiment of the invention, the electrolyte herbicide is glufosinate and the herbicide to be suspended is selected from any one of the herbicides mentioned above. In still another embodiment of the invention, the electrolyte herbicide is 2,4-D and the herbicide to be suspended is selected from any one of the herbicides mentioned above. In yet another embodiment of the invention, the electrolyte herbicide is dicamba and the herbicide to be suspended is selected from any one of the herbicides mentioned above.

Combinations of electrolyte herbicide to be dissolved in the liquid composition (first mentioned) and herbicide to be suspended in the liquid composition (second mentioned) include the following: dicamba-sodium and prosulfuron; dicamba-sodium and diflufenzopyr; glufosinate- ammonium and diuron; glufosinate- ammonium and simazine; glyphosate-isopropylammonium and florasulam; glyphosate-isopropylammonium and diuron; glyphosate-isopropylamine and diuron; glyphosate-potassium and diuron; glyphosate-sodium and diuron; glyphosate-potassium and pendimethalin; glufosinate- ammonium and saflufenacil; 2,4-D-dimethylammonium and florasulam; dicamba-potassium and saflufenacil; glyphosate-isopropylammonium and quizalofop-P; glyphosate-potassium and isoxaflutole; glyphosate-isopropylammonium and mesotrione; glyphosate-isopropylammonium and metolachlor; glufosinate- ammonium and pendimethalin; dicamba-potassium and atrazine; clopyralid and florasulam; glyphosate-isopropylammonium and acetochlor; glyphosate-isopropylammonium and metsulfuron-methyl; glyphosate-isopropylammonium and nicosulfuron; glyphosate-isopropylammonium and sulfosulfuron; dicamba-potassium and tribenuron-methyl, glyphosate-isopropylammonium and acetochlor. Combinations of electrolyte herbicide to be dissolved in the liquid composition (first mentioned) and two herbicides to be suspended in the liquid composition (second and third mentioned) include the following: glufosinate- ammonium with diuron and amitrole; glufosinate- ammonium with ethofumasate and phenmedipham; dicamba-potassium with atrazine and mesotrione; and dicamba-potassium with atrazine and S-metolachlor.

Examples of suitable safeners that can be suspended in the liquid agrochemical composition of the invention include those listed in the Pesticide Manual (British Crop Protection Council; 16th edition). Preferred herbicide safeners for use in the present invention include benoxacor, BCS (1-bromo-4-[(chloromethyl)sulfonyl]benzene), cloquintocet-methyl, cyometrinil, cyprosulfamide, dichlormid, dicyclonon, 2-(dichloromethyl)-2-methyl-1,3-dioxolane (MG 191), dietholate, fenchlorazole-ethyl, fenclorim, flurazole, fluxofenim, furilazole, isoxadifen-ethyl, jiecaowan, jiecaoxi, mefenpyr, mefenpyrethyl, methoxyphenone ((4-methoxy-3-methylphenyl)(3-methylphenyl)methanone), mephenate, naphthalic anhydride, oxabetrinil, AD67, mefenpyr-diethyl, R29148, TI-35, and MG191.

Examples of suitable plant growth regulators that can be suspended in the liquid agrochemical composition of the invention include 6-benzylaminopurine, cytokinins, prohexadione-calcium, paclobutrazol, sintofen, uniconazole, and cyclanilide.

Examples of suitable fungicides that can be suspended in the liquid agrochemical composition of the invention include azoxystrobin, coscalid, captan, carboxin, chlorothalonil, difenaconazole, cpoxiconazole, fenamidone, fludioxinil, fluopicolide, fluoxastrobin, flusilazole, folpet, ipconazole, mancozeb, mandipromid, metconazole, pencycuron, propiconazole, prothioconazole, pyrimethanil, sulfur, tebuconazole, tetraconazole, thibendazole, trifloxystrobin, triticonazole, zoxamide, benthiavalicarb-isopropyl, bitertanol, carpropamid, iprodione, kresoxim-methyl, maneb, metrafenone, picoxystrobin, spiroxamine, thifluzamide, thiophanate-methyl, thiram, tolclofos-methyl, and triadimenol. Combinations of electrolyte fungicide to be dissolved in the liquid composition (first mentioned) and other fungicide to be suspended in the liquid composition (second and optionally third mentioned) include the following: imazalil sulphate with pyrimethanil and pencycuron; propamocarb hydrochloride with fenamidone and fluopicolide; potassium bicarbonate with sulfur; and phosphonic acid with azoxystrobin.

Examples of suitable acaricide or insecticides that can be suspended in the liquid agrochemical composition of the invention include bifenazate, bifenthrin, bromopropylate, carbofuran, chromafenozide, clofentazine, alpha-cypermethrin, deltamethrin, dicofol, diflubenzuron, etofenprox, etoxazole, fipronil, imidachloprid, indoxacarb, metaflumizone, methiocarb, methoxyfenocide, novaluron, pyridalyl, pyrimethanil, quinoxyfen, spinosad, spirodiclofen, spiromesifen, spirotetramat, teflubenzuron, thiocloprid, and thiamethoxam.

### (v) Other components

In addition to the ingredients described in detail above, the liquid agrochemical composition of the invention may comprise one or more additional co-formulants such as other surfactants (e.g. emulsifiers and/or dispersants), polymeric amphoteric dispersants such as Atlox^{®} 4915 to prevent or minimise flocculation of the suspended agrochemical, thickeners and thixotropic agents, wetting agents, anti-drift agents, adhesives, penetrants, preservatives, antifreeze agents (such as propylene glycol and glycerol), antioxidants, solubilizers, fillers, carriers, colorants (such as dyes), antifoams (such as silicone based agents), fertilizers, evaporation inhibitors and agents which modify pH and viscosity. Because the combination of the aforementioned alkylpolyglucoside surfactant, alkyl glucamide ester surfactant and/or an ethoxylated fatty alcohol phosphate ester surfactant (a) and a co-surfactant (b) comprising an anionic head group and a tail group, wherein the tail group comprises at least two alkyl, alkenyl or alkynyl groups is capable of suspending an agrochemical in the formulation, even in the presence of a large amount of electrolyte agrochemical, the present invention provides improved freedom to formulators to tailor the composition to particular needs. For instance, the present invention allows reduced amounts of thickeners and thixotropic agents thus leaving room for other adjuvants, such as one of those listed in the Compendium of Herbicide Adjuvants, 12th Edition, Southern Illinois University, 2014, or any earlier edition thereof. Examples of commonly used adjuvants include, but are not limited to, paraffin oil, horticultural spray oils (e.g., summer oil), methylated rape seed oil, methylated soybean oil, highly refined vegetable oil, polyol fatty acid esters, polyethoxylated esters, ethoxylated alcohols, alkyl polysaccharides and blends, amine ethoxylates, sorbitan fatty acid ester ethoxylates, polyethylene glycol esters, alkylpolyglucosides and their derivatives (e.g. esters), organosilicone based surfactants, ethylene vinyl acetate terpolymers, and ethoxylated alkyl aryl phosphate esters.

### 4.3 Method of preparation

The liquid agrochemical composition of the invention can be prepared by known processes, for example, as will be described in more detail later, by first preparing a mill base of certain ingredients and a solution base of certain ingredients and then combining both by blending. So long as the final composition comprises the aforementioned surfactant (a) and the co-surfactant (b), vesicles will form thus forming a solution-suspension of the two or more agrochemicals.

To prepare the mixtures, it is possible to use customary mixing apparatus which, if required, are thermostatted. For pre-grinding, it is possible to use, for example, high-pressure homogenizers or mills operating by the rotor-stator principle, such as Ultraturrax homogenizers, for example those from IKA, or toothed colloid mills, for example from Puck or Fryma. For fine grinding, it is possible to use, for example, bead mills which operate batchwise, for example from Drais, or bead mills which operate continuously, for example from Bachofen or Eiger.

### 5. Preferred embodiments

A preferred embodiment of the liquid agrochemical composition according to the invention is one comprising:
30 to 60 wt.% water;
one or more electrolyte agrochemicals dissolved in the water, wherein the total amount of electrolyte agrochemicals dissolved in the water is 20 wt.% or more based on the total amount of water in the liquid agrochemical composition;
2 to 6 wt.% of an alkylpolyglucoside surfactant represented by Formula (I) below;
2 to 6 wt.% of a co-surfactant represented by any one of Formulae 9 to 14 below:
1 to 10 wt.% of an agrochemical suspended in the water;

   Formula (I): H-(G)ₙ-O-R

   wherein
G represents a radical resulting from the removal of a molecule of H₂O from a monosaccharide, preferably a hexose having the formula C₆H₁₂O₆ or a pentose having the formula C₅H₁₀O₅;
'n' is between 1 and 5; and
R represents an alkyl radical, linear or branched, saturated or unsaturated, having a number of carbon atoms ranging from 8 to 20; 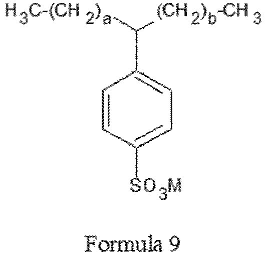 wherein
for Formula 9: M is cation, preferably H⁺, Na⁺, K⁺, NH₄⁺, NH₃iPr⁺, or Ca²⁺; and
'a' and 'b' are the same or different and are selected to be an integer from 0 to 11, provided that a+b is from 7 to 11; 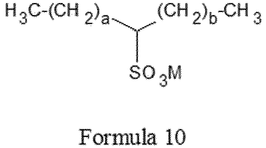 wherein
for Formula 10: M is a cation, preferably H⁺, Na⁺, K⁺, Ca²⁺, NH₄⁺, or NH₃iPr⁺, and
'a' and 'b' are the same or different and are selected to be an integer from 0 to 11, provided that a+b is from 9 to 16; 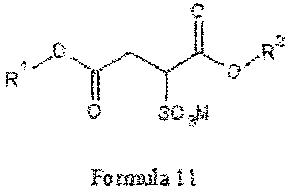 wherein
for Formula 11: M is cation, preferably H⁺, Na⁺, K⁺, Ca²⁺, NH₄⁺, or NH₃iPr⁺; and
R¹ and R² are the same or different and are selected to be a C6 to C10 straight chain alkyl group; and 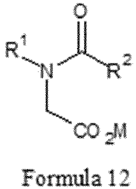 wherein
for Formula 12: M is cation, preferably H⁺, Na⁺, K⁺, Ca²⁺, NH₄⁺, or NH₃iPr⁺; and
R¹ and R² are the same or different and are selected to be a C1 to 16 straight chain alkyl group, provided that together R¹ and R² provide 6 to 18 carbon atoms; 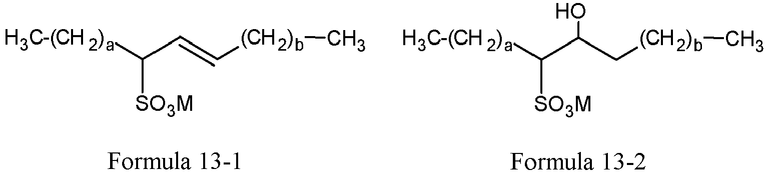 wherein
for Formula 13-1 and 13-2: M is a cation, preferably H⁺, Na⁺, K⁺, Ca²⁺, NH₄⁺, or NH₃iPr⁺; 'a' and 'b' are the same or different and are selected to be an integer from 0 to 11, provided that a+b is from 9 to 14; 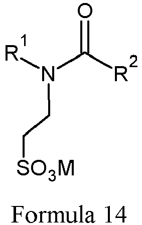 wherein
for Formula 14: M is cation, for example H⁺, Na⁺, K⁺, Ca²⁺, NH₄⁺, or NH₃iPr⁺, and R¹ and R² are the same or different and are selected to be a C1 to 20 straight chain alkyl or alkenyl group, provided that together R¹ and R² provide 6 to 20 carbon atoms.

In this preferred embodiment the electrolyte agrochemical dissolved in the water is preferably selected from glyphosate-isopropylammonium, glyphosate-potassium, glyphosate-sesquisodium, glyphosate diammonium, glyphosate dimethylammonium, glyphosate-ammonium, and glufosinate ammonium. In another preferred embodiment the agrochemical suspended in the liquid composition is diuron. In a preferred embodiment the co-surfactant is represented by Formula 9 and the electrolyte agrochemical dissolved in the water is selected from glyphosate-isopropylammonium, glyphosate-potassium, glyphosate-sesquisodium, glyphosate diammonium, glyphosate dimethylammonium, glyphosate-ammonium, and glufosinate ammonium. In another preferred embodiment, the electrolyte agrochemical dissolved in the water is selected from glyphosate-isopropylammonium, glyphosate-potassium, glyphosate-sesquisodium, glyphosate diammonium, glyphosate dimethylammonium, glyphosate-ammonium, and glufosinate ammonium, the co-surfactant is represented by Formula 9, and the agrochemical suspended in the liquid composition is diuron.

### 6. Examples

### Example 1 - Testing various surfactants as the co-surfactant (b) to the alkylpolyglucoside surfactant (a)

Agrochemical compositions comprising a variety of test surfactants as a co-surfactant (b) to an alkylpolyglucoside surfactant (a) were prepared and tested for stability.

### Preparation of a mill base

Being practically water-insoluble, the algicide and herbicide Diuron ((3-(3,4-dichlorophenyl)-1,1-dimethylurea) was chosen as being representative of the general class of agrochemicals that can be suspended in accordance with the present invention.

Water (48.98 wt.%), Silcolapse^{®} 426R (0.82 wt.%), Agnique^{®} PG-8107G (6.27 wt.%) and Diuron (43.93 wt.%) were added together and blended using a Silverson high shear mixer that was set at 3000 rpm with a small hole head. Agnique^{®} PG-8107G (BASF AG) is an alkylpolyglucoside, representative of one class of surfactants that are required for the present invention. Silcolapse^{®} 426R (Bluestar Silicones) is an anti-foamer and is added to reduce foaming during preparation and throughout the experiment. The obtained slurry was bead milled in an Eiger mill for approximately 40 minutes at 3000 rpm using 1-1.3 mm beads. The final particle size of the Diuron (D50: 1.9 µm; D90: 4.7 µm) was typical of that used for suspensions of agrochemical particles in aqueous formulations. It was observed by microscopy that the particles were well-dispersed in the millbase.

### Preparation of solution base

Being a water-soluble electrolyte, the herbicide glyphosate was chosen as being representative of the general class of electrolyte agrochemicals that can be dissolved in the aqueous phase in accordance with the present invention.

Water (36.47 wt.%), Silcolapse^{®} 426R (0.10 wt.%), Agnique^{®} PG-8107G (5.66 wt.%), and 83.7% KOH (16.39 wt.%) were added together and stirred with an overhead mixer fitted with a propeller stirrer. Glyphosate (41.38 wt.%) was added slowly to the KOH solution and stirred for at least one hour to ensure complete neutralization and dissolution.

### Preparation of the agrochemical compositions for testing

Agrochemical compositions were prepared by blending the mill base as described previously (21.48 wt.%), water (2.57 wt.%), the surfactant to be tested (14.53 wt.% of a 30% aq. solution of surfactant) and the solution base as described previously (61.42 wt.%). After blending, agrochemical compositions were obtained having an electrolyte agrochemical (glyphosate) dissolved in an aqueous phase and having another agrochemical (Diuron) suspended in the aqueous phase. The relative amount of the different components in the compositions was as follows:

| Component | Amount (wt.%) |
|---|---|
| Glyphosate acid | 25.42 |
| KOH | 8.42 |
| antifoam agent (from Silcolapse^{®} 426R) | 0.24 |
| alkylpolyglucoside (from Agnique^{®} PG-8107G) | 3.37 |
| Test surfactant | 4.36 |
| Diuron | 9.44 |
| Water | 48.75 |

The compositions were stored for one week at 20°C and then visually inspected for stability. The results for the different compositions comprising the different test surfactants are provided in the table below. The degree of separation is an estimate based on the amount of clear solution that separated from the otherwise opaque composition.

| **Ex. No.** | Commercial source | Test surfactant | Result |
|---|---|---|---|
| | | | |

| | **Surfactants according to the invention** | | |
|---|---|---|---|
| | | | |
| **1-1** | Nansa^{®} HS80S | sodium dodecylbenzene sulphonate | <1% separation, good pourability |
| **1-2** | Crodasinic^{®} LS30 | sodium cocyl sarcosinate | no separation, good pourability |
| **1-3** | Hostaspur^{®} SAS93 | sodium secondary alkyl sulphonate | <1% separation, good pourability |
| **1-4** | Crodasinic^{®} MS30 | sodium myristoyl sarcosinate | no separation, good pourability |
| **1-5** | Biosoft^{®} 411-E | iPrNH3-LABS | no separation, good pourability |
| **1-6** | Crodasinic^{®} O | oleoyl sarcosine | no separation, good pourability |
| | | | |

| | **Comparative surfactants** | | |
|---|---|---|---|
| **Comp. Ex. No** | Commercial source | Test surfactant | Result |
| **1-7** | Synperonic^{®} A2 | C12,C15 EO2 | 34% separation |
| **1-8** | Synperonic^{®} 13/6.5 | isotridecanol 6.5EO | 28% separation |
| **1-9** | Adsee^{®} AB615 | oleyl alkoxylated amine | 31% separation |
| **1-10** | Arquad^{®} 16-29 | hexadecyltrimethylammonium chloride | 20% separation |
| **1-11** | Ammonyx^{®} LO | lauramine oxide | 16% separation* |
| **1-12** | Empigen^{®} BB | lauryl betaine | 13% separation* |
| **1-13** | Empicol^{®} LZ | sodium lauryl sulfate | not pourable |
| **1-14** | Steol^{®} CS270 | sodium alkyl ethoxy 2EO sulphate | 17% separation* |
| **1-15** | Polyaldo^{®} 6-2-6 | distearoyl polyglycerol (6) | not pourable |
| **1-16** | Polyaldo^{®} 10-2-P | dipalmitoyl polyglycerol (10) | 40% separation* |
| **1-17** | Polyaldo^{®} 10-10-O | decaoleyl polyglycerol (10) | 32% separation* |

| | | | |
|---|---|---|---|
| ^{∗} exhibited increased viscosity and therefore had poor pourability after storage | | | |

For the present experiments, good pourability was defined as <500 mPa·s at 20 sec⁻¹; poor pourability is defined as >1000 mPa·s at 20 sec⁻¹.

It is clear from the data in the table above that not all surfactants worked synergistically with the alkylpolyglucoside to provide a stable yet pourable composition in the presence of a significant amount of electrolyte agrochemical. For example, nonionic surfactants that are typically used in agrochemical compositions, such as alkoxylated fatty alcohols (Synperonic^{®} A2; Synperonic^{®} 13/6.5) and alkoxylated fatty amines (Adsee^{®} AB615), as well as cationic surfactants such as those based on a quaternary ammonium (Arquad^{®} 16-29), led to compositions that exhibited significant separation. It was also not sufficient for the surfactant to be amphoteric (Ammonyx^{®} LO) or to be a zwitterion (Empigen^{®} BB). While these were somewhat more stable than the non-ionic and cationic surfactants, they nevertheless suffered significant separation and also exhibited poor pourability.

From the data above it can be seen that the surfactants that lead to pourable compositions with little or no separation upon storage share common traits. First, they are all anionic surfactants having at least two hydrocarbon chains. Anionic surfactants having just one hydrocarbon chain led to compositions that were either not pourable (Empicol^{®} LZ) or exhibited low pourability with significant separation (Steol^{®} CS270). It is not enough for the surfactant to simply have two hydrocarbon chains. Surfactants having two hydrocarbon chains but which are not anionic led to compositions that were either not pourable (Polyaldo^{®} 6-2-6) or exhibited poor pourability and/or significant separation (Polyaldo^{®} 10-2-P; Polyaldo^{®} 10-10-O).

### Example 2 - Increasing the amount of electrolyte agrochemical

An agrochemical composition was prepared with a significantly higher amount of electrolyte agrochemical and was tested for stability under different conditions. The table below provides a summary of the composition and the test results.

| Component | Example No. 2-1 (wt. %) |
|---|---|
| | |
| Glyphosate acid | 33.30 |
| KOH | 13.2 |
| antifoam agent (from Silcolapse^{®} 426R) | 0.20 |
| alkylpolyglucoside (from Agnique^{®} PG-8107G) | 4.00 |
| sodium dodecylbenzene sulphonate (from Nansa^{®} HS80S) | 3.50 |
| Diuron | 10.00 |
| Water | 35.80 |
| | |
| Storage condition | Result |
| 7 weeks at -10°C | no separation |
| 7 weeks at 20°C | no separation |
| 7 weeks at 40°C | <1% separation |
| 4 months at 20°C | no separation |

As can be seen from the data above, the combination of surfactants in accordance with the invention provides stable agrochemical compositions under various testing conditions. After storage, all samples were stable and exhibited good pourability. Good pourability is defined as <500 mPas at 20 sec⁻¹.

### Example 3 - Using a mixture of co-surfactants

An agrochemical composition was prepared in which a mixture of co-surfactants according to the invention were used. The table below provides a summary of the composition and the test results.

| Component | Example No. 3-1 (wt.%) |
|---|---|
| | |
| Glyphosate acid | 25.42 |
| KOH | 8.42 |
| antifoam agent (from Silcolapse^{®} 426R) | 0.24 |
| alkylpolyglucoside (from Agnique^{®} PG-8107G) | 3.37 |
| sodium dioctylsulphosuccinate (from Aerosol^{®} OT-100) | 0.72 |
| sodium cocyl sarcosinate (from Crodasinic^{®} LS40) | 2.57 |
| Diuron | 9.44 |
| Water | 49.82 |
| | |
| Storage condition | Result |
| 4 weeks at 40°C | no separation |
| 7 weeks at 0°C | no separation |
| 7 weeks at 20°C | no separation |

As can be seen from the data above, the combination of surfactants in accordance with the invention provides stable agrochemical compositions under various testing conditions. After storage, all samples were stable and exhibited good pourability. Good pourability is defined as <500 mPa·s at 20 sec⁻¹.

### Example 4 - Reducing the amount of co-surfactant (b)

An agrochemical composition was prepared in which the amount of co-surfactant was reduced. The table below provides a summary of the composition and the test results.

| Component | Ex. No. 4-1 (wt. %) | Ex. No. 4-2 (wt. %) |
|---|---|---|
| | | |
| Glyphosate acid | 25.42 | 25.42 |
| KOH | 8.42 | 8.42 |
| antifoam agent (from Silcolapse^{®} 426R) | 0.24 | 0.24 |
| alkylpolyglucoside (from Agnique^{®} PG-8107G) | 3.37 | 3.37 |
| sodium dioctylsulphosuccinate (from Aerosol^{®} OT-100) | 2.00 | 1.43 |
| Diuron | 9.44 | 9.44 |
| Water | 51.11 | 51.68 |
| | | |
| Storage condition | Result | Result |
| 7 weeks at 0°C | <1% separation | <1% separation |
| 7 weeks at 20°C | <1% separation | no separation |
| 7 weeks at 40°C | <1% separation | no separation |

As can be seen from the data above, reducing the amount of co-surfactant still provides stable agrochemical compositions under various testing conditions. After storage, all samples were stable and exhibited good pourability. Good pourability is defined as <500 mPa·s at 20 sec⁻¹.

### Example 5 - Using a mix of a co-surfactant according to the invention and another surfactant

An agrochemical composition was prepared in which a mixture of a co-surfactant according to the invention and another surfactant was used. The table below provides a summary of the composition and the test results.

| Component | Ex. No. 5-1 (wt. %) |
|---|---|
| | |
| Glyphosate acid | 25.17 |
| KOH | 8.36 |
| antifoam agent (from Silcolapse^{®} 426R) | 0.24 |
| alkylpolyglucoside (from Agnique^{®} PG-8107G) | 3.34 |
| sodium dodecylbenzene sulphonate (from Nansa^{®} HS80) | 4.32 |
| sodium alkyl ethoxy 2EO sulphate (from Steol^{®} CS270) | 1.00 |
| Diruon | 9.35 |
| Water | 48.22 |
| | |
| Storage condition | Result |
| 2 weeks at 20°C | no separation |
| 2 weeks at 0°C | no separation |
| 4 weeks at 40°C | no separation |

As can be seen from the data above, while a surfactant such as sodium alkyl ethoxy 2EO sulphate (from Steol^{®} CS270) was not by itself sufficient to provide a stable composition with an alkylpolyglucoside (see Example 1), it can nevertheless be added to the composition if a co-surfactant according to the invention is present.

### Reference Example 6 - Using a co-surfactant of the invention with a betaine surfactant.

This example tests if alkylpolyglucoside surfactants can be replaced with another electrolyte tolerant surfactant and retain stability. In this example the alkylpolyglucoside surfactant of the previous examples was replaced with a betaine surfactant (Empigen^{®} BS). Betaines are a class of surfactant that are considered to have a greater electrolyte tolerance than ethoxylated surfactants, anionic surfactants and cationic surfactants on account that they are less likely to precipitate from a high-electrolyte composition than these other surfactants.

### Preparation of a mill base

Water (21.75 wt.%), Silcolapse^{®} 426R (0.82 wt.%), Empigen^{®} BS (33.50 wt.% of a 30% aq. solution) and Diuron (43.93 wt.%) were added together and blended using a Silverson high shear mixer that was set at 3000 rpm with a small hole head. The obtained slurry was bead milled in an Eiger mill for approximately 13 minutes at 3000 rpm using 1-1.3 mm beads. The final particle size of the Diuron (D50: 2.2 µm; D90: 5.1 µm) was typical of that used for suspensions of agrochemical particles in aqueous formulations and the particles were well-dispersed in the millbase (as observed by microscopy).

### Preparation of solution base

Water (35.53 wt.%), Silcolapse^{®} 426R (0.10 wt.%), 30% aq. soln. of Empigen^{®} BS (6.60 wt.%), and 83.7% KOH (16.39 wt.%) were added together and stirred with an overhead mixer fitted with a propeller stirrer. Glyphosate (41.38 wt.%) was added slowly to the KOH solution and stirred for at least one hour to ensure complete neutralization and dissolution.

### Preparation of the agrochemical compositions for testing

Agrochemical compositions were prepared by blending the mill base as described previously (21.48 wt.%), water (2.57 wt.%), Nansa^{®} HS 80S (14.53 wt.% of a 30% aq. solution of surfactant) and the solution base as described previously (61.42 wt.%). After blending, an agrochemical composition was obtained as follows:

| Component | Ref. Ex. No. 6-1 (wt.%) |
|---|---|
| | |
| Glyphosate acid | 25.42 |
| KOH | 8.42 |
| antifoam agent (from Silcolapse^{®} 426R) | 0.24 |
| betaine surfactant (from Empigen^{®} BS) | 3.37 |
| sodium dodecylbenzene sulphonate (from Nansa^{®} HS80) | 4.36 |
| Diuron | 9.44 |
| Water | 48.75 |
| | |
| Storage condition | Result |
| 1 week at 20°C | 40% separation |

The composition was stored for one week at 20°C and then visually inspected for stability and was estimated to give 40% separation. Comparing this data to the corresponding composition in Example 1 that used sodium dodecylbenzene sulphonate (from Nansa^{®} HS80S) (stability at one week at 20°C: <1% separation) makes it clear that the co-surfactant of the invention works synergistically with alkylpolyglucoside surfactants to provide stable compositions, even in the presence of electrolyte agrochemicals.

### Example 7 - Varying the ratio of alkylpolyglucoside and co-surfactant

Agrochemical compositions were prepared in which the relative amount of alkylpolyglucoside surfactant and co-surfactant is varied. The table below provides a summary of the compositions and the test results.

| Component | Ex. No. 7-1 | Ex. No. 7-2 | Ex. No. 7-3 | Ex. No. 7-4 |
|---|---|---|---|---|
| | | | | |
| Glyphosate acid | 33.30 | 33.30 | 33.30 | 33.30 |
| KOH | 13.2 | 13.2 | 13.2 | 13.2 |
| antifoam agent (from Silcolapse^{®} 426R) | 0.20 | 0.20 | 0.20 | 0.20 |
| alkylpolyglucoside (from Agnique^{®} PG-8107G) | 3.25 | 4.00 | 4.80 | 5.50 |
| sodium dodecylbenzene sulphonate (from Nansa^{®} HS80S) | 4.25 | 3.50 | 2.70 | 2.00 |
| Diuron | 10.00 | 10.00 | 10.00 | 10.00 |
| Water | 35.8 | 35.8 | 35.8 | 35.8 |
| | | | | |
| Storage condition | Result | | | |
| 4 months at 20°C | <1% separation | no separation | No separation | <1% separation |
| Viscosity @ 20sec-1, 20°C | 125 mPas | 178 mPas | 460 mPas | 985 mPas |

In this experiment the total amount of alkylpolyglucoside surfactant and co-surfactant was kept constant (7.50 wt.%) but their relative amounts were varied. All samples had at least acceptable or good pourability and were stable. Good pourability is defined as <500 mPa·s at 20 sec⁻¹; acceptable pourability is defined as 500-1000 mPa·s at 20 sec⁻¹.

### Example 8 - Testing the present invention for suspending an agrochemical as compared to a typical system of the prior art that relies on xanthan gum

Agrochemical compositions were prepared largely in line with Example 1. The table below provides a summary of the compositions and the test results. The composition with the xanthan gum (Kelzan AP-AS) was designed to have as close as possible a viscosity as the composition of the invention before being sent for storage.

| Component | Ex. No. 8-1 (wt. %) | Comp. Ex. No. 8-2 (wt. %) |
|---|---|---|
| Glyphosate acid | 33.3 | 33.3 |
| KOH | 13.2 | 13.2 |
| antifoam agent (from Silcolapse^{®} 426R) | 0.2 | 0.2 |
| alkylpolyglucoside (from Agnique^{®} PG-8107G) | 4.0 | 7.5 |
| sodium dodecylbenzene sulphonate (from Nansa HS80S) | 3.5 | -- |
| xanthan gum (from Kelzan AP-AS) | -- | 0.1 |
| Diuron | 10.0 | 10.0 |
| Water | 35.8 | 35.7 |
| | | |
| Viscosity after preparation (@20 sec-1) | 178 mPa·s | 177 mPa·s |
| | | |
| Storage condition | Result | Result |
| 7 weeks at -10°C | no separation, good pourability | no separation, poor pourability |
| 7 weeks at 20°C | no separation, good pourability | 17% separation, good pourability |
| 7 weeks at 40°C | <1% separation, | 11% separation, good |
| | good pourability | pourability |

The composition of the invention exhibited good stability and pourability under all storage conditions. Good pourability is defined as <500 mPa·s at 20 sec⁻¹. The composition with xanthan gum exhibited significant separation at 20°C and 40°C and poor pourability at -10°C.

### Example 9 - Changing the electrolyte agrochemical

Agrochemical compositions were prepared using glufosinate-ammonium instead of glyphosate. The table below provides a summary of the compositions and the test results.

| Component | Example No. 9-1 (wt. %) | Example No. 9-2 (wt. %) |
|---|---|---|
| | | |
| Glufosinate-ammonium | 34.23 | 31.63 |
| antifoam agent (from Silcolapse^{®} 426R) | 0.24 | 0.25 |
| alkylpolyglucoside (from Agnique^{®} PG-8107G) | 3.35 | 4.50 |
| sodium cocyl sarcosinate (from Crodasinic^{®} LS40) | 3.76 | - |
| isopropylamine LABS (from Biosoft 411-E) | - | 5.16 |
| sodium alkyl ethoxy 2EO sulphate (from Steol^{®} CS270) | - | 2.50 |
| Diuron | 9.30 | 6.07 |
| Water | 49.12 | 49.89 |
| | | |
| Storage condition | Result | |
| 2 weeks at 40°C | no separation | no separation |
| 2 weeks at 0°C | no separation | no separation |
| 8 weeks at 20°C | no separation | no separation |

As can be seen from the data above, the combination of surfactants in accordance with the invention provides stable agrochemical compositions under various testing conditions for a different electrolyte agrochemical (in this case glufosinate-ammonium). After storage, all samples were stable and exhibited good pourability. Good pourability is defined as <500 mPa·s at 20 sec⁻¹.

### Reference Example 10 - Composition using an amine oxide surfactant as the co-surfactant (a)

This example tests if the co-surfactant (a) of the present invention can be replaced with another surfactant (alkyl dimethylamine oxides) that is considered in the art to have equivalent electrolyte tolerance as alkylpolyglucosides. An agrochemical composition was prepared but using an alkyl dimethylamine oxide as the co-surfactant (a) instead of an alkylpolyglucoside. The table below provides a summary of the composition and the test results.

| Component | Ref. Ex. No. 10 (wt. %) |
|---|---|
| | |
| Glyphosate acid | 19.85 |
| KOH | 7.79 |
| antifoam agent (from Silcolapse^{®} 426R) | 0.26 |
| alkylpolyglucoside (from Agnique^{®} PG-8107G) | 0.36 |
| C12,C14-alkyl dimethylamine oxide (from Genaminox LA) | 4.51 |
| isopropylamine LABS (from Biosoft 411-E) | 6.00 |
| Diruon | 8.48 |
| Water | 51.28 |
| | |
| Storage condition | Result |
| 7 weeks at 20°C | 20% separation |

This example shows that an alkyl dimethylamine oxide cannot replace alkylpolyglucoside as the main soluble surfactant in the glyphosate electrolyte solution.

## Claims

1. A liquid agrochemical composition comprising:
(i) water in an amount of 30 wt.% or more based on the total weight of the liquid agrochemical composition:
(ii) one or more electrolyte agrochemicals dissolved in the water, wherein the total amount of electrolyte agrochemicals dissolved in the water is 20 wt.% or more based on the total weight of water in the liquid agrochemical composition;
(iii) a surfactant system comprising:
(a) 2.0 to 6.0 wt.% of an alkylpolyglucoside surfactant based on the total weight of the liquid agrochemical composition; and
(b) 2.0 to 6.0 wt.% of a co-surfactant based on the total weight of the liquid agrochemical composition, wherein the co-surfactant is one or more surfactants represented by Formulae 9 to 14 below; and
(iv) one or more agrochemicals suspended in the water: 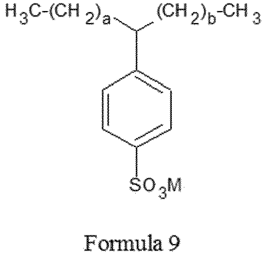 wherein
for Formula 9: M is a cation, preferably H⁺, Na⁺, K⁺, Ca²⁺, NH₄⁺, or NH₃iPr⁺; and
'a' and 'b' are the same or different and are selected to be an integer from 0 to 11, provided that a+b is from 7 to 11; 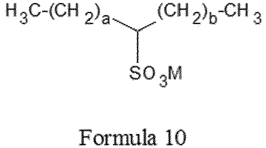 wherein
for Formula 10: M is a cation, preferably H⁺, Na⁺, K⁺, Ca²⁺, NH₄⁺, or NH₃iPr⁺; and
'a' and 'b' are the same or different and are selected to be an integer from 0 to 11, provided that a+b is from 9 to 16; 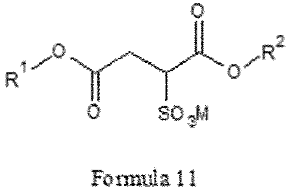 wherein
for Formula 11: M is cation, preferably H⁺, Na⁺, K⁺, Ca²⁺, NH₄⁺, or NH₃iPr⁺; and
R¹ and R² are the same or different and are selected to be a C6 to C10 straight chain alkyl group; and 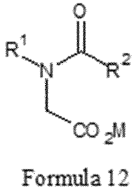 wherein
for Formula 12: M is cation, preferably H⁺, Na⁺, K⁺, Ca²⁺, NH₄⁺, or NH₃iPr⁺; and
R¹ and R² are the same or different and are selected to be a C1 to 16 straight chain alkyl group, provided that together R¹ and R² provide 6 to 18 carbon atoms; 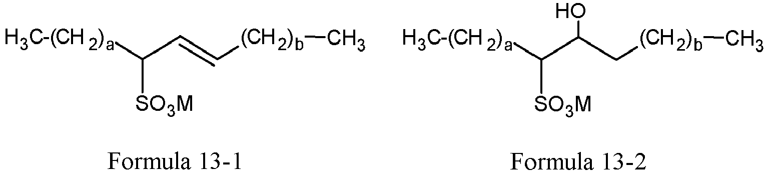 wherein
for Formula 13-1 and 13-2: M is a cation, preferably H⁺, Na⁺, K⁺, Ca²⁺, NH₄⁺, or NH₃iPr⁺; the dotted line represents an optional double bond; 'a' and 'b' are the same or different and are selected to be an integer from 0 to 11, provided that a+b is from 9 to 14; 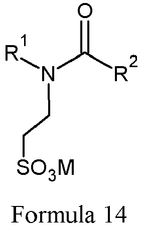 wherein
for Formula 14: M is cation, for example H⁺, Na⁺, K⁺, Ca²⁺, NH₄⁺, or NH₃iPr⁺, and R¹ and R² are the same or different and are selected to be a C1 to 20 straight chain alkyl or alkenyl group, provided that together R¹ and R² provide 6 to 20 carbon atoms.

2. The liquid agrochemical composition according to claim 1,
wherein the alkylpolyglucoside surfactant is represented by the following Formula (I):
Formula (I): H-(G)ₙ-O-R
wherein
G represents a radical resulting from the removal of a molecule of H₂O from a monosaccharide, preferably a hexose having the formula C₆H₁₂O₆ or a pentose having the formula C₅H₁₀O₅;
'n' is between 1 and 5; and
R represents an alkyl radical, linear or branched, saturated or unsaturated, having a number of carbon atoms ranging from 8 to 20.

3. The liquid agrochemical composition according to any one of claims 1 or 2, wherein the weight ratio of the total amount of alkylpolyglucoside surfactant to the total amount of co-surfactant (b) is from 0.3 to 3.

4. The liquid agrochemical composition according to any one of claims 1 to 3, comprising:
30 to 60 wt.% water;
one or more electrolyte agrochemicals dissolved in the water, wherein the total amount of electrolyte agrochemicals dissolved in the water is 20 wt.% or more based on the total amount of water in the liquid agrochemical composition;
2 to 6 wt.% of an alkylpolyglucoside surfactant represented by Formula (I) below;
2 to 6 wt.% of a co-surfactant represented by any one of Formulae 9 to 14 below:
1 to 10 wt.% of an agrochemical suspended in the water;
Formula (I): H-(G)ₙ-O-R
wherein
G represents a radical resulting from the removal of a molecule of H₂O from a monosaccharide, preferably a hexose having the formula C₆H₁₂O₆ or a pentose having the formula C₅H₁₀O₅;
'n' is between 1 and 5; and
R represents an alkyl radical, linear or branched, saturated or unsaturated, having a number of carbon atoms ranging from 8 to 20; 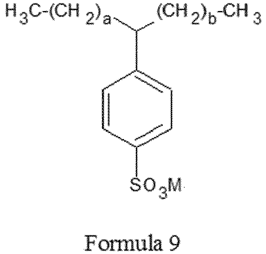 wherein
for Formula 9: M is cation, preferably H⁺, Na⁺, K⁺, Ca²⁺, NH₄⁺, or NH₃iPr⁺; and
'a' and 'b' are the same or different and are selected to be an integer from 0 to 11, provided that a+b is from 7 to 11; 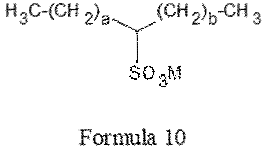
wherein
for Formula 10: M is a cation, preferably H⁺, Na⁺, K⁺, Ca²⁺, NH₄⁺, or NH₃iPr⁺, and
'a' and 'b' are the same or different and are selected to be an integer from 0 to 11, provided that a+b is from 9 to 16; 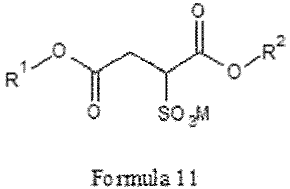 wherein
for Formula 11: M is cation, preferably H⁺, Na⁺, K⁺, Ca²⁺, NH₄⁺, or NH₃iPr⁺; and
R¹ and R² are the same or different and are selected to be a C6 to C10 straight chain alkyl group; and 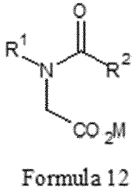 wherein
for Formula 12: M is cation, preferably H⁺, Na⁺, K⁺, Ca²⁺, NH₄⁺, or NH₃iPr⁺; and
R¹ and R² are the same or different and are selected to be a C1 to 16 straight chain alkyl group, provided that together R¹ and R² provide 6 to 18 carbon atoms; 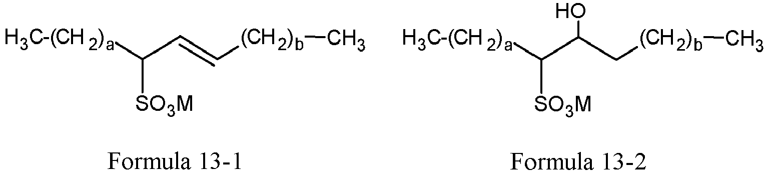 wherein
for Formula 13-1 and 13-2: M is a cation, preferably H⁺, Na⁺, K⁺, Ca²⁺, NH₄⁺, or NH₃iPr⁺; 'a' and 'b' are the same or different and are selected to be an integer from 0 to 11, provided that a+b is from 9 to 14; 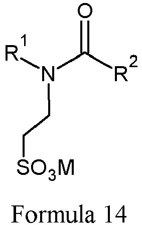 wherein
for Formula 14: M is cation, for example H⁺, Na⁺, K⁺, Ca²⁺, NH₄⁺, or NH₃iPr⁺, and R¹ and R² are the same or different and are selected to be a C1 to 20 straight chain alkyl or alkenyl group, provided that together R¹ and R² provide 6 to 20 carbon atoms.

5. The liquid agrochemical composition according to any one of claims 1 to 4, wherein the electrolyte agrochemical is selected from glyphosate, glufosinate, 2,4-D, or dicamba.

6. The agrochemical composition according to any one of claims 1 to 5, comprising:
40 to 60 wt.% water;
20 to 35 wt.% of one or more electrolyte agrochemicals dissolved in the water, wherein the electrolyte agrochemicals are selected from glyphosate, glufosinate, 2,4-D or dicamba;
2 to 6 wt.% of an alkylpolyglucoside surfactant represented by Formula (I) below;
2 to 6 wt.% of a co-surfactant represented by any one of Formulae 9 to 14 below:
1 to 10 wt.% of an agrochemical suspended in the water;
Formula (I): H-(G)ₙ-O-R
wherein
G represents a radical resulting from the removal of a molecule of H₂O from a hexose having the formula C₆H₁₂O₆ or a pentose having the formula C₅H₁₀O₅;
'n' is between 1 and 5; and
R represents an alkyl radical, linear or branched, saturated or unsaturated, having a number of carbon atoms ranging from 8 to 20; 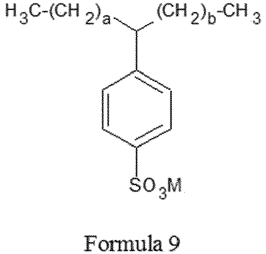 wherein
for Formula 9: M is cation, preferably H⁺, Na⁺, K⁺, Ca²⁺, NH₄⁺, or NH₃iPr⁺; and
'a' and 'b' are the same or different and are selected to be an integer from 0 to 11, provided that a+b is from 7 to 11; 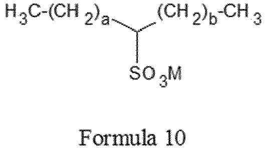 wherein
for Formula 10: M is a cation, preferably H⁺, Na⁺, K⁺, Ca²⁺, NH₄⁺, or NH₃iPr⁺, and
'a' and 'b' are the same or different and are selected to be an integer from 0 to 11, provided that a+b is from 9 to 16; 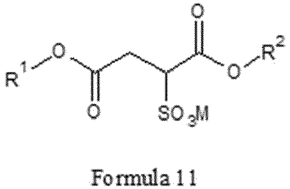 wherein
for Formula 11: M is cation, preferably H⁺, Na⁺, K⁺, Ca²⁺, NH₄⁺, or NH₃iPr⁺; and
R¹ and R² are the same or different and are selected to be a C6 to C10 straight chain alkyl group; and 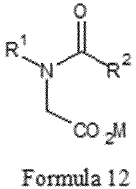 wherein
for Formula 12: M is cation, preferably H⁺, Na⁺, K⁺, Ca²⁺, NH₄⁺, or NH₃iPr⁺; and R¹ and R² are the same or different and are selected to be a C1 to 16 straight chain alkyl group, provided that together R¹ and R² provide 6 to 18 carbon atoms; 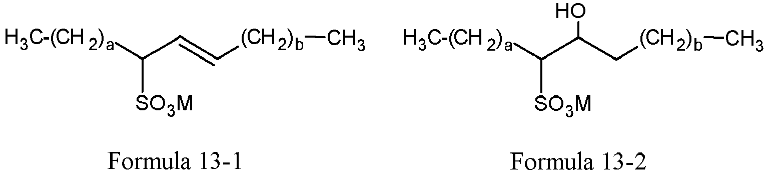 wherein
for Formula 13-1 and 13-2: M is a cation, preferably H⁺, Na⁺, K⁺, Ca²⁺, NH₄⁺, or NH₃iPr⁺; the dotted line represents an optional double bond; 'a' and 'b' are the same or different and are selected to be an integer from 0 to 11, provided that a+b is from 9 to 14; 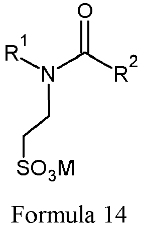 wherein
for Formula 14: M is cation, for example H⁺, Na⁺, K⁺, Ca²⁺, NH₄⁺, or NH₃iPr⁺, and R¹ and R² are the same or different and are selected to be a C1 to 20 straight chain alkyl or alkenyl group, provided that together R¹ and R² provide 6 to 20 carbon atoms.

7. The agrochemical composition according to any one of claims 1 to 6, wherein the agrochemical suspended in the water is one or more herbicides selected from acetochlor, amidosulfuron, atrazine, azimsulfuron, bensulfuron-methyl, benzobicyclon, bromoxynil, butachlor, butafenacil, carfentrazone-ethyl, chlorimuron-ethyl, chlorsulfuron, cinmethylin, cinosulfuron, diflufenican, diuron, ethofumasate, ethoxysulfuron, flazasulfuron, florasulam, flucarbazone-sodium, flufenacet, foramsulfuron, flupyrsulfuron-methyl-sodium, halosulfuron-methyl, haloxyfop-P, imazapic, imazosulfuron, iodosulfuron-methyl-sodium, mesosulfuron-methyl, mesotrione, metamitron, metolachlor, S-metolachlor, metsulfuron-methyl, nicosulfuron, orthosulfamuron, oxasulfuron, pendimethalin, phenmedipham, picolinafen, primisulfuron-methyl, propachlor, prosulfuron, pyrazosulfuron-ethyl, quizalofop-P, rimsulfuron, saflufenacil, simazine, sulfometuron-methyl, sulfosulfuron, thifensulfuron-methyl, tribenuron-methyl, trifloxysulfuron, triflusulfuron-methyl, and tritosulfuron.

## Patentansprüche

1. Flüssige Agrochemikalienzusammensetzung, umfassend:
(i) Wasser in einer Menge von 30 Gew.-% oder mehr, bezogen auf das Gesamtgewicht der flüssigen Agrochemikalienzusammensetzung,
(ii) eine oder mehrere in dem Wasser gelöste Elektrolytagrochemikalien, wobei die Gesamtmenge der in dem Wasser gelösten Elektrolytagrochemikalien 20 Gew.-% oder mehr, bezogen auf das Gesamtgewicht des Wassers in der flüssigen Agrochemikalienzusammensetzung, beträgt,
(iii) ein Tensidsystem, umfassend:
(a) 2,0 bis 6,0 Gew.-% eines Alkylpolyglucosid-Tensids, bezogen auf das Gesamtgewicht der flüssigen Agrochemikalienzusammensetzung, und
(b) 2,0 bis 6,0 Gew.-% eines Co-Tensids, bezogen auf das Gesamtgewicht der flüssigen Agrochemikalienzusammensetzung, wobei das Co-Tensid ein oder mehrere Tenside, dargestellt durch die nachstehenden Formeln 9 bis 14, ist, und
(iv) eine oder mehrere in dem Wasser suspendierte Agrochemikalien: 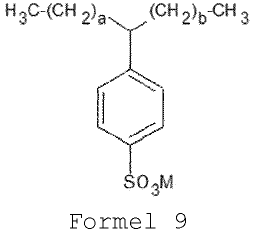 wobei
für Formel 9 M ein Kation, vorzugsweise H⁺, Na⁺, K⁺, Ca²⁺, NH₄⁺ oder NH₃iPr⁺, ist und
"a" und "b" gleich oder verschieden sind und so ausgewählt sind, dass sie eine ganze Zahl von 0 bis 11 sind, vorausgesetzt, dass a+b 7 bis 11 ist, 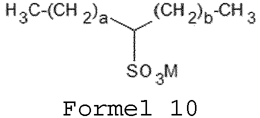 wobei
für Formel 10 M ein Kation, vorzugsweise H⁺, Na⁺, K⁺, Ca²⁺, NH₄⁺ oder NH₃iPr⁺, ist und
"a" und "b" gleich oder verschieden sind und so ausgewählt sind, dass sie eine ganze Zahl von 0 bis 11 sind, vorausgesetzt, dass a+b 9 bis 16 ist, 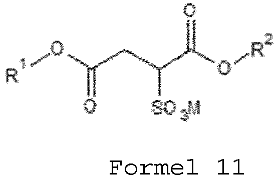 wobei
für Formel 11 M ein Kation, vorzugsweise H⁺, Na⁺, K⁺, Ca²⁺, NH₄⁺ oder NH₃iPr⁺, ist und
R¹ und R² gleich oder verschieden sind und so ausgewählt sind, dass sie eine geradkettige C6-bis C10-Alkylgruppe sind, und 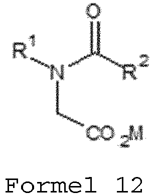 wobei
für Formel 12 M ein Kation, vorzugsweise H⁺, Na⁺, K⁺, Ca²⁺, NH₄⁺ oder NH₃iPr⁺, ist und
R¹ und R² gleich oder verschieden sind und so ausgewählt sind, dass sie eine geradkettige C1-bis C16-Alkylgruppe sind, vorausgesetzt, dass R¹ und R² zusammen 6 bis 18 Kohlenstoffatome bereitstellen, 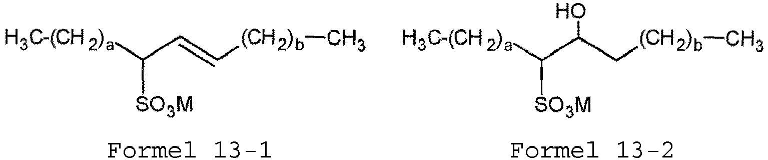 wobei
für Formeln 13-1 und 13-2 M ein Kation, vorzugsweise H⁺, Na⁺, K⁺, Ca²⁺, NH₄⁺ oder NH₃iPr⁺, ist, die gestrichelte Linie eine optionale Doppelbindung darstellt, "a" und "b" gleich oder verschieden sind und so ausgewählt sind, dass sie eine ganze Zahl von 0 bis 11 sind, vorausgesetzt, dass a+b 9 bis 14 ist, 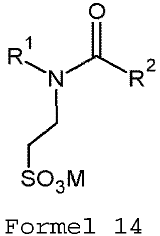 wobei
für Formel 14 M ein Kation, zum Beispiel H⁺, Na⁺, K⁺, Ca²⁺, NH₄⁺ oder NH₃iPr⁺, ist und R¹ und R² gleich oder verschieden sind und so ausgewählt sind, dass sie eine geradkettige C1- bis C20-Alkyl- oder -Alkenylgruppe sind, vorausgesetzt, dass R¹ und R² zusammen 6 bis 20 Kohlenstoffatome bereitstellen.

2. Flüssige Agrochemikalienzusammensetzung gemäß Anspruch 1,
wobei das Alkylpolyglucosid-Tensid durch die folgende Formel (I) dargestellt ist:
Formel (I): H-(G)ₙ-O-R
wobei
G einen Rest, darstellt, der aus der Entfernung eines HgO-Moleküls von einem Monosaccharid, vorzugsweise einer Hexose mit der Formel C₆H₁₂O₆ oder einer Pentose mit der Formel C₅H₁₀O₅, resultiert,
"n" zwischen 1 und 5 ist und
R einen Alkylrest, linear oder verzweigt, gesättigt oder ungesättigt, mit einer Kohlenstoffatomanzahl im Bereich von 8 bis 20 darstellt.

3. Flüssige Agrochemikalienzusammensetzung gemäß einem der Ansprüche 1 oder 2, wobei das Gewichtsverhältnis der Gesamtmenge des Alkylpolyglucosid-Tensids zu der Gesamtmenge des Co-Tensids (b) 0,3 bis 3 beträgt.

4. Flüssige Agrochemikalienzusammensetzung gemäß einem der Ansprüche 1 bis 3, umfassend:
30 bis 60 Gew.-% Wasser,
eine oder mehrere in dem Wasser gelöste Elektrolytargochemikalien, wobei die Gesamtmenge der in dem Wasser gelösten Elektrolytagrochemikalien 20 Gew.-% oder mehr, bezogen auf die Gesamtmenge des Wassers in der flüssigen Agrochemikalienzusammensetzung, beträgt,
2 bis 6 Gew.-% eines durch die nachstehende Formel (I) dargestellten Alkylpolyglucosid-Tensids,
2 bis 6 Gew.-% eines durch eine der nachstehenden Formeln 9 bis 14 dargestellten Co-Tensids,
1 bis 10 Gew.-% einer in dem Wasser suspendierten Agrochemikalie,
Formel (I): H-(G)ₙ-O-R
wobei
G einen Rest, darstellt, der aus der Entfernung eines HgO-Moleküls von einem Monosaccharid, vorzugsweise einer Hexose mit der Formel C₆H₁₂O₆ oder einer Pentose mit der Formel C₅H₁₀O₅, resultiert,
"n" zwischen 1 und 5 ist und
R einen Alkylrest, linear oder verzweigt, gesättigt oder ungesättigt, mit einer Kohlenstoffatomanzahl im Bereich von 8 bis 20 darstellt, 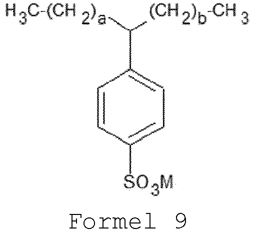 wobei
für Formel 9 M ein Kation, vorzugsweise H⁺, Na⁺, K⁺, Ca²⁺, NH₄⁺ oder NH₃iPr⁺, ist und
"a" und "b" gleich oder verschieden sind und so ausgewählt sind, dass sie eine ganze Zahl von 0 bis 11 sind, vorausgesetzt, dass a+b 7 bis 11 ist, 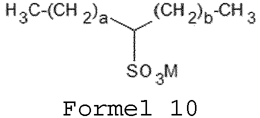 wobei
für Formel 10 M ein Kation, vorzugsweise H⁺, Na⁺, K⁺, Ca²⁺, NH₄⁺ oder NH₃iPr⁺, ist und
"a" und "b" gleich oder verschieden sind und so ausgewählt sind, dass sie eine ganze Zahl von 0 bis 11 sind, vorausgesetzt, dass a+b 9 bis 16 ist, 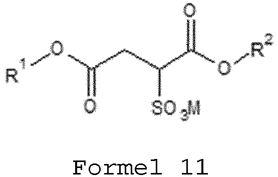 wobei
für Formel 11 M ein Kation, vorzugsweise H⁺, Na⁺, K⁺, Ca²⁺, NH₄⁺ oder NH₃iPr⁺, ist und
R¹ und R² gleich oder verschieden sind und so ausgewählt sind, dass sie eine geradkettige C6- bis C10-Alkylgruppe sind, und 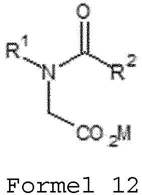 wobei
für Formel 12 M ein Kation, vorzugsweise H⁺, Na⁺, K⁺, Ca²⁺, NH₄⁺ oder NH₃iPr⁺, ist und
R¹ und R² gleich oder verschieden sind und so ausgewählt sind, dass sie eine geradkettige C1- bis C16-Alkylgruppe sind, vorausgesetzt, dass R¹ und R² zusammen 6 bis 18 Kohlenstoffatome bereitstellen 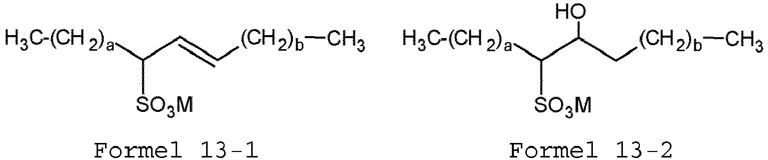 wobei
für Formeln 13-1 und 13-2 M ein Kation, vorzugsweise H⁺, Na⁺, K⁺, Ca²⁺, NH₄⁺ oder NH₃iPr⁺, ist, "a" und "b" gleich oder verschieden sind und so ausgewählt sind, dass sie eine ganze Zahl von 0 bis 11 sind, vorausgesetzt, dass a+b 9 bis 14 ist, 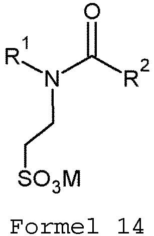 wobei
für Formel 14 M ein Kation, zum Beispiel H⁺, Na⁺, K⁺, Ca²⁺, NH₄⁺ oder NH₃iPr⁺, ist und R¹ und R² gleich oder verschieden sind und so ausgewählt sind, dass sie eine geradkettige C1- bis C20-Alkyl- oder -Alkenylgruppe sind, vorausgesetzt, dass R¹ und R² zusammen 6 bis 20 Kohlenstoffatome bereitstellen.

5. Flüssige Agrochemikalienzusammensetzung gemäß einem der Ansprüche 1 bis 4, wobei die Elektrolytagrochemikalie aus Glyphosat, Glufosinat, 2,4-D oder Dicamba ausgewählt ist.

6. Flüssige Agrochemikalienzusammensetzung gemäß einem der Ansprüche 1 bis 5, umfassend:
40 bis 60 Gew.-% Wasser,
20 bis 35 Gew.-% einer oder mehrerer in dem Wasser gelösten Elektrolytagrochemikalien, wobei die Elektrolytagrochemikalien aus Glyphosat, Glufosinat, 2,4-D oder Dicamba ausgewählt sind,
2 bis 6 Gew.-% eines durch die nachstehende Formel (I) dargestellten Alkylpolyglucosid-Tensids,
2 bis 6 Gew.-% eines durch eine der nachstehenden Formeln 9 bis 14 dargestellten Co-Tensids,
1 bis 10 Gew.-% einer in dem Wasser suspendierten Agrochemikalie,
Formel (I): H-(G)ₙ-O-R
wobei
G einen Rest, darstellt, der aus der Entfernung eines HgO-Moleküls von einer Hexose mit der Formel C₆H₁₂O₆ oder einer Pentose mit der Formel C₅H₁₀O₅, resultiert,
"n" zwischen 1 und 5 ist und
R einen Alkylrest, linear oder verzweigt, gesättigt oder ungesättigt, mit einer Kohlenstoffatomanzahl im Bereich von 8 bis 20 darstellt, 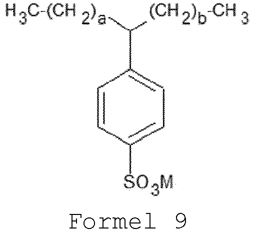 wobei
für Formel 9 M ein Kation, vorzugsweise H⁺, Na⁺, K⁺, Ca²⁺, NH₄⁺ oder NH₃iPr⁺, ist und
"a" und "b" gleich oder verschieden sind und so ausgewählt sind, dass sie eine ganze Zahl von 0 bis 11 sind, vorausgesetzt, dass a+b 7 bis 11 ist, 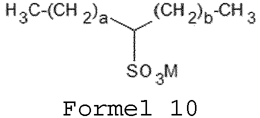 wobei
für Formel 10 M ein Kation, vorzugsweise H⁺, Na⁺, K⁺, Ca²⁺, NH₄⁺ oder NH₃iPr⁺, ist und
"a" und "b" gleich oder verschieden sind und so ausgewählt sind, dass sie eine ganze Zahl von 0 bis 11 sind, vorausgesetzt, dass a+b 9 bis 16 ist, 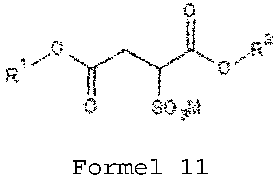 wobei
für Formel 11 M ein Kation, vorzugsweise H⁺, Na⁺, K⁺, Ca²⁺, NH₄⁺ oder NH₃iPr⁺, ist und
R¹ und R² gleich oder verschieden sind und so ausgewählt sind, dass sie eine geradkettige C6- bis C10-Alkylgruppe sind, und 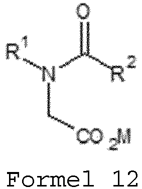 wobei
für Formel 12 M ein Kation, vorzugsweise H⁺, Na⁺, K⁺, Ca²⁺, NH₄⁺ oder NH₃iPr⁺, ist und
R¹ und R² gleich oder verschieden sind und so ausgewählt sind, dass sie eine geradkettige C1- bis C16-Alkylgruppe sind, vorausgesetzt, dass R¹ und R² zusammen 6 bis 18 Kohlenstoffatome bereitstellen 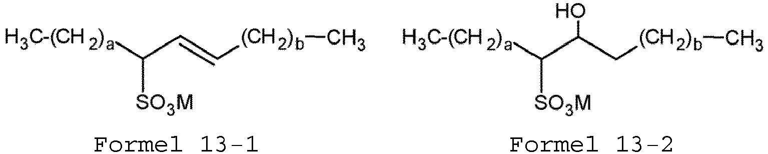 wobei
für Formeln 13-1 und 13-2 M ein Kation, vorzugsweise H⁺, Na⁺, K⁺, Ca²⁺, NH₄⁺ oder NH₃iPr⁺, ist, die gestrichelte Linie eine optionale Doppelbindung darstellt, "a" und "b" gleich oder verschieden sind und so ausgewählt sind, dass sie eine ganze Zahl von 0 bis 11 sind, vorausgesetzt, dass a+b 9 bis 14 ist, 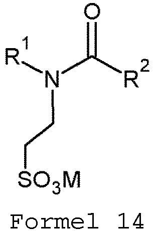 wobei
für Formel 14 M ein Kation, zum Beispiel H⁺, Na⁺, K⁺, Ca²⁺, NH₄⁺ oder NH₃iPr⁺, ist und R¹ und R² gleich oder verschieden sind und so ausgewählt sind, dass sie eine geradkettige C1- bis C20-Alkyl- oder -Alkenylgruppe sind, vorausgesetzt, dass R¹ und R² zusammen 6 bis 20 Kohlenstoffatome bereitstellen.

7. Agrochemikalienzusammensetzung gemäß einem der Ansprüche 1 bis 6, wobei die in dem Wasser suspendierte Agrochemikalie ein oder mehrere Heberizide, ausgewählt aus Acetochlor, Amidosulfuron, Atrazin, Azimsulfuron, Bensulfuron-methyl, Benzobicyclon, Bromoxynil, Butachlor, Butafenacil, Carfentrazinon-ethyl, Chlorimuron-ethyl, Chlorsulfuron, Cinmethylin, Cinosulfuron, Diflufenican, Diuron, Ethofumasat, Ethoxysulfuron, Flazasulfuron, Florasulam, Flucarbazon-Natrium, Flufenacet, Foramsulfuron, Flupyrsulfuronmethyl-Natrium, Halosulfuron-methyl, Haloxyfop-P, Imazapic, Imazosulfuron, Iodsulfuron-methyl-Natrium, Mesosulfuron-methyl, Mesotrion, Metamitron, Metolachlor, S-Metolachlor, Metsulfuron-methyl, Nicosulfuron, Orthosulfamuron, Oxasulfuron, Pendimethalin, Phenmedipham, Picolinafen, Primisulfuron-methyl, Propachlor, Prosulfuron, Pyrazosulfuron-ethyl, Quizalofop-P, Rimsulfuron, Saflufenacil, Simazin, Sulfometuron-methyl, Sulfosulfuron, Thifensulfuronmethyl, Tribenuron-methyl, Trifloxysulfuron, Triflusulfuron-methyl und Tritosulfuron, ist.

## Revendications

1. Composition agrochimique liquide comprenant :
(i) de l'eau en une quantité de 30 % en poids ou plus sur la base du poids total de la composition agrochimique liquide :
(ii) un ou plusieurs produits agrochimiques électrolytiques dissous dans l'eau, dans laquelle la quantité totale des produits agrochimiques électrolytiques dissous dans l'eau est de 20 % en poids ou plus sur la base du poids total de l'eau dans la composition agrochimique liquide ;
(iii) un système tensioactif comprenant :
(a) 2,0 à 6,0 % en poids d'un tensioactif de type alkylpolyglucoside sur la base du poids total de la composition agrochimique liquide ; et
(b) 2,0 à 6,0 % en poids d'un co-tensioactif sur la base du poids total de la composition agrochimique liquide, dans laquelle le co-tensioactif est un ou plusieurs tensioactifs représentés par les Formules 9 à 14 ci-dessous ; et
(iv) un ou plusieurs produits agrochimiques en suspension dans l'eau : 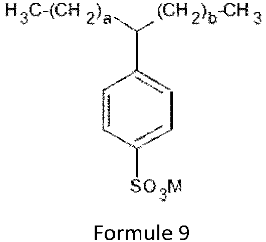 dans laquelle
pour la Formule 9: M est un cation, de préférence H⁺, Na⁺, K⁺, Ca²⁺, NH₄⁺, ou NH₃iPr⁺; et
« a » et « b » sont identiques ou différents et sont sélectionnés de manière à être un nombre entier de 0 à 11, à condition que a+b soit de 7 à 11 ; 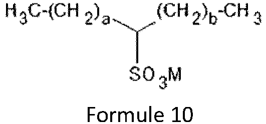 dans laquelle
pour la Formule 10 : M est un cation, de préférence H⁺, Na⁺, K⁺, Ca²⁺, NH₄⁺, ou NH₃iPr⁺; et
« a » et « b » sont identiques ou différents et sont sélectionnés de manière à être un nombre entier de 0 à 11, à condition que a+b soit de 9 à 16 ; 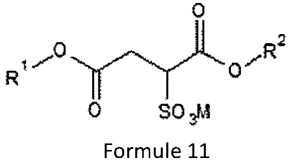 dans laquelle
pour la Formule 11 : M est un cation, de préférence H⁺, Na⁺, K⁺, Ca²⁺, NH₄⁺, ou NH₃iPr⁺; et
R¹ et R² sont identiques ou différents et sont sélectionnés de manière à être un groupe alkyle à chaîne linéaire en C6 à C10 ; et 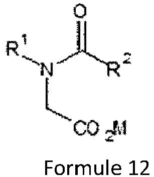 dans laquelle
pour la Formule 12 : M est un cation, de préférence H⁺, Na⁺, K⁺, Ca²⁺, NH₄⁺, ou NH₃iPr⁺; et
R¹ et R² sont identiques ou différents et sont sélectionnés de manière à être un groupe alkyle à chaîne linéaire en C1 à C16, à condition que R¹ et R² ensemble fournissent 6 à 18 atomes de carbone ; 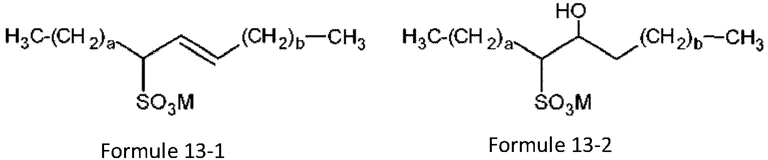 dans laquelle
pour les Formules 13-1 et 13-2 : M est un cation, de préférence H⁺, Na⁺, K⁺, Ca²⁺, NH₄⁺, ou NH₃iPr⁺; la ligne pointillée représente une double liaison facultative; « a » et « b » sont identiques ou différents et sont sélectionnés de manière à être un nombre entier de 0 à 11, à condition que a+b soit de 9 à 14 ; 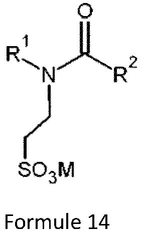 dans laquelle
pour la Formule 14 : M est un cation, par exemple H⁺, Na⁺, K⁺, Ca²⁺, NH₄⁺, ou NH₃iPr⁺, et R¹ et R² sont identiques ou différents et sont sélectionnés de manière à être un groupe alkyle ou alcényle à chaîne linéaire en C1 à 20, à condition que R¹ et R² ensemble fournissent 6 à 20 atomes de carbone.

2. Composition agrochimique liquide selon la revendication 1,
dans laquelle le tensioactif de type alkylpolyglucoside est représenté par la Formule (1) suivante :
Formule (1) : H-(G)ₙ-O-R
dans laquelle
G représente un radical résultant de l'élimination d'une molécule de H₂O à partir d'un monosaccharide, de préférence un hexose présentant la formule C₆H₁₂O₆ ou un pentose présentant la formule C₅H₁₀O₅ ;
« n » est entre 1 et 5 ; et
R représente un radical alkyle, linéaire ou ramifié, saturé ou insaturé, présentant un nombre d'atomes de carbone allant de 8 à 20.

3. Composition agrochimique liquide selon l'une quelconque des revendications 1 ou 2, dans laquelle le rapport pondéral de la quantité totale de tensioactif de type alkylpolyglucoside par rapport à la quantité totale de co-tensioactif (b) est de 0,3 à 3.

4. Composition agrochimique liquide selon l'une quelconque des revendications 1 à 3, comprenant :
30 à 60 % en poids d'eau ;
un ou plusieurs produits agrochimiques électrolytiques dissous dans l'eau, dans laquelle la quantité totale des produits agrochimiques électrolytiques dissous dans l'eau est de 20 % en poids ou plus sur la base de la quantité totale de l'eau dans la composition agrochimique liquide ;
2 à 6 % en poids d'un tensioactif de type alkylpolyglucoside représenté par la Formule (1) ci-dessous ;
2 à 6 % en poids d'un co-tensioactif représenté par l'une quelconque des Formules 9 à 14 ci-dessous :
1 à 10 % en poids d'un produit agrochimique en suspension dans l'eau ;
Formule (I): H-(G)ₙ-O-R
dans laquelle
G représente un radical résultant de l'élimination d'une molécule de H₂O à partir d'un monosaccharide, de préférence un hexose présentant la formule C₆H₁₂O₆ ou un pentose présentant la formule C₅H₁₀O₅ ;
« n » est entre 1 et 5 ; et
R représente un radical alkyle, linéaire ou ramifié, saturé ou insaturé, présentant un nombre d'atomes de carbone allant de 8 à 20 ; 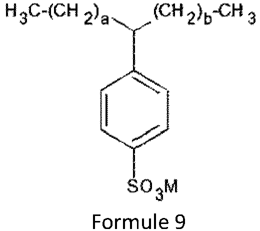 dans laquelle
pour la Formule 9 : M est un cation, de préférence H⁺, Na⁺, K⁺, Ca²⁺, NH₄⁺, ou NH₃iPr⁺ et
« a » et « b » sont identiques ou différents et sont sélectionnés de manière à être un nombre entier de 0 à 11, à condition que a+b soit de 7 à 11 ; 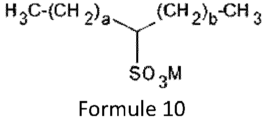 dans laquelle
pour la Formule 10 : M est un cation, de préférence H⁺, Na⁺, K⁺, Ca²⁺, NH₄⁺, ou NH₃iPr⁺ et
« a » et « b » sont identiques ou différents et sont sélectionnés de manière à être un nombre entier de 0 à 11, à condition que a+b soit de 9 à 16 ; 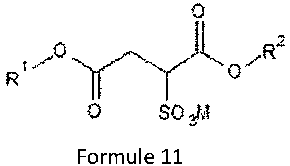 dans laquelle
pour la Formule 11 : M est un cation, de préférence H⁺, Na⁺, K⁺, Ca²⁺, NH₄⁺, ou NH₃iPr⁺ ; et
R¹ et R² sont identiques ou différents et sont sélectionnés de manière à être un groupe alkyle à chaîne linéaire en C6 à C10 ; et 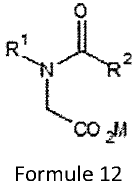 dans laquelle
pour la Formule 12 : M est un cation, de préférence H⁺, Na⁺, K⁺, Ca²⁺, NH₄⁺, ou NH₃iPr⁺ ; et
R¹ et R² sont identiques ou différents et sont sélectionnés de manière à être un groupe alkyle à chaîne linéaire en C1 à C16, à condition que R¹ et R² ensemble fournissent 6 à 18 atomes de carbone ; 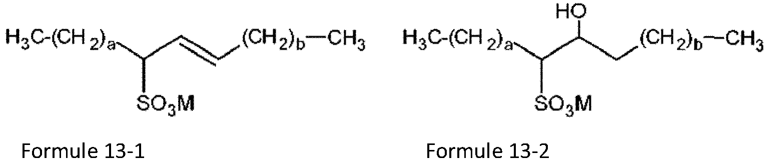 dans laquelle
pour les Formules 13-1 et 13-2 : M est un cation, de préférence H⁺, Na⁺, K⁺, Ca²⁺, NH₄⁺, ou NH₃iPr⁺ ; « a » et « b » sont identiques ou différents et sont sélectionnés de manière à être un nombre entier de 0 à 11, à condition que a+b soit de 9 à 14 ; 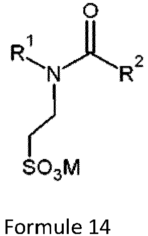 dans laquelle
pour la Formule 14 : M est un cation, par exemple H⁺, Na⁺, K⁺, Ca²⁺, NH₄⁺, ou NH₃iPr⁺, et R¹ et R² sont identiques ou différents et sont sélectionnés de manière à être un groupe alkyle ou alcényle à chaîne linéaire en C1 à 20, à condition que R¹ et R² ensemble fournissent 6 à 20 atomes de carbone.

5. Composition agrochimique liquide selon l'une quelconque des revendications 1 à 4, dans laquelle le produit agrochimique électrolytique est sélectionné parmi le glyphosate, le glufosinate, le 2,4-D, ou le dicamba.

6. Composition agrochimique selon l'une quelconque des revendications 1 à 5, comprenant :
40 à 60 % en poids d'eau ;
20 à 35 % en poids d'un ou de plusieurs produits agrochimiques électrolytiques dissous dans l'eau, dans laquelle les produits agrochimiques électrolytiques sont sélectionnés parmi le glyphosate, le glufosinate, le 2,4-D, ou le dicamba ;
2 à 6 % en poids d'un tensioactif de type alkylpolyglucoside représenté par la Formule (1) ci-dessous ;
2 à 6 % en poids d'un co-tensioactif représenté par l'une quelconque des formules 9 à 14 ci-dessous :
1 à 10 % en poids d'un produit agrochimique en suspension dans l'eau ;
Formule (1) : H-(G)ₙ-O-R
dans laquelle
G représente un radical résultant de l'élimination d'une molécule de H₂O à partir d'un hexose présentant la formule C₆H₁₂O₆ ou d'un pentose présentant la formule C₅H₁₀O₅ ;
« n » est entre 1 et 5 ; et
R représente un radical alkyle, linéaire ou ramifié, saturé ou insaturé, présentant un nombre d'atomes de carbone allant de 8 à 20 ; 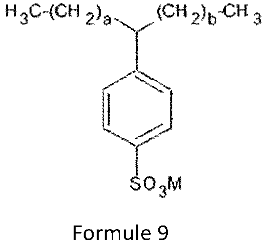 dans laquelle
pour la Formule 9: M est un cation, de préférence H⁺, Na⁺, K⁺, Ca²⁺, NH₄⁺, ou NH₃iPr⁺ ; et
« a » et « b » sont identiques ou différents et sont sélectionnés de manière à être un nombre entier de 0 à 11, à condition que a+b soit de 7 à 11 ; 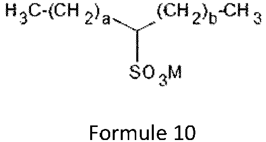 dans laquelle
pour la Formule 10 : M est un cation, de préférence H⁺, Na⁺, K⁺, Ca²⁺, NH₄⁺, ou NH₃iPr⁺, et
« a » et « b » sont identiques ou différents et sont sélectionnés de manière à être un nombre entier de 0 à 11, à condition que a+b soit de 9 à 16 ; 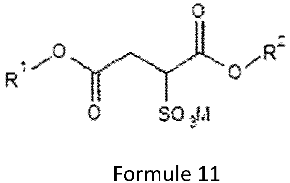 dans laquelle
pour la Formule 11 : M est un cation, de préférence H⁺, Na⁺, K⁺, Ca²⁺, NH₄⁺, ou NH₃iPr⁺ ; et
R¹ et R² sont identiques ou différents et sont sélectionnés de manière à être un groupe alkyle à chaîne linéaire en C6 à C10 ; et 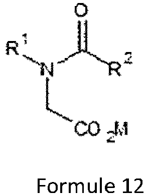 dans laquelle
pour la Formule 12 : M est un cation, de préférence H⁺, Na⁺, K⁺, Ca²⁺, NH₄⁺, ou NH₃iPr⁺, et
R¹ et R² sont identiques ou différents et sont sélectionnés de manière à être un groupe alkyle à chaîne linéaire en C1 à C16, à condition que R¹ et R² ensemble fournissent 6 à 18 atomes de carbone ; 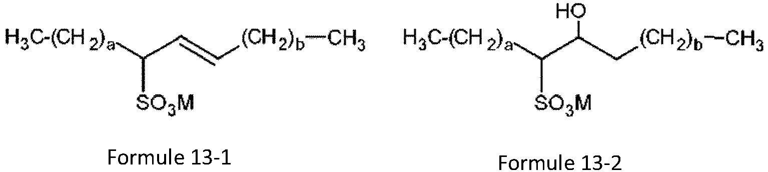 dans laquelle
pour les Formules 13-1 et 13-2 : M est un cation, de préférence H⁺, Na⁺, K⁺, Ca²⁺, NH₄⁺, ou NH₃iP⁺; la ligne pointillée représente une double liaison facultative ; « a » et « b » sont identiques ou différents et sont sélectionnés de manière à être un nombre entier de 0 à 11, à condition que a+b soit de 9 à 14 ; 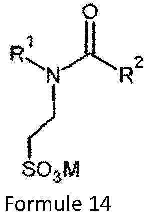 dans laquelle
pour la Formule 14 : M est un cation, par exemple H⁺, Na⁺, K⁺, Ca²⁺, NH₄⁺, ou NH₃iPr⁺ et R¹ et R² sont identiques ou différents et sont sélectionnés de manière à être un groupe alkyle ou alcényle à chaîne linéaire en C1 à 20, à condition que R¹ et R² ensemble fournissent 6 à 20 atomes de carbone.

7. Composition agrochimique selon l'une quelconque des revendications 1 à 6, dans laquelle le produit agrochimique en suspension dans l'eau est un ou plusieurs herbicides sélectionnés parmi l'acétochlor, l'amidosulfuron, l'atrazine, l'azimsulfuron, le bensulfuron-méthyle, le benzobicyclon, le bromoxynil, le butachlor, le butafénacil, la carfentrazone-éthyle, le chlorimuron-éthyle, le chlorsulfuron, la cinméthyline, le cinosulfuron, le diflufénican, le diuron, l'éthofumasate, l'éthoxysulfuron, le flazasulfuron, le florasulam, la flucarbazone-sodium, le flufénacet, le foramsulfuron, le flupyrsulfuron-méthylsodium, l'halosulfuron-méthyle, l'haloxyfop-P, l'imazapic, l'imazosulfuron, l'iodosulfuron-méthylsodium, le mésosulfuron-méthyle, la mésotrione, le métamitron, le métolachlor, le S-métolachlor, le metsulfuron-méthyle, le nicosulfuron, l'orthosulfamuron, l'oxasulfuron, la pentdiméthaline, le phenmédipham, le picolinafène, le primisulfuron-méthyle, le propachlor, le prosulfuron, le pyrazosulfuron-éthyle, le quizalofop-P, le rimsulfuron, le saflufénacil, la simazine, le sulfométuron-méthyle, le sulfosulfuron, le thifensulfuron-méthyle, le tribénuron-méthyle, le trifloxysulfuron, le triflusulfuron-méthyle, et le tritosulfuron.
